(19) **Europäisches Patentamt**
**European Patent Office**
**Office européen des brevets**

(11) **EP 4 603 892 A1**

(12) **EUROPEAN PATENT APPLICATION**
published in accordance with Art. 153(4) EPC

(43) Date of publication:
20.08.2025 Bulletin 2025/34

(21) Application number: 24883535.7

(22) Date of filing: 11.11.2024

(51) International Patent Classification (IPC):
G02B 27/02 (2006.01)       B60K 35/21 (2024.01)
B60K 35/22 (2024.01)       B60K 35/23 (2024.01)
B60K 35/40 (2024.01)       G02B 5/30 (2006.01)
G02B 5/32 (2006.01)        G02B 27/01 (2006.01)
G02B 30/26 (2020.01)       G02B 30/30 (2020.01)
G02F 1/13 (2006.01)        G02F 1/1335 (2006.01)
G02F 1/13363 (2006.01)     G09F 9/00 (2006.01)

(52) Cooperative Patent Classification (CPC):
B60K 35/21; B60K 35/22; B60K 35/23;
B60K 35/40; G02B 5/30; G02B 5/32; G02B 27/01;
G02B 27/02; G02B 30/26; G02B 30/30; G02F 1/13;
G02F 1/1335; G02F 1/13363; G09F 9/00

(86) International application number:
PCT/JP2024/040045

(87) International publication number:
WO 2025/100550 (15.05.2025 Gazette 2025/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.11.2023 JP 2023192609
10.05.2024 JP 2024077602
12.06.2024 JP 2024095459

(71) Applicant: Kyocera Corporation
Kyoto-shi, Kyoto 612-8501 (JP)

(72) Inventors:
• KUSAFUKA, Kaoru
Kyoto-shi, Kyoto 612-8501 (JP)
• SATOU, Akinori
Kyoto-shi, Kyoto 612-8501 (JP)
• MATSUDA, Kazumasa
Kyoto-shi, Kyoto 612-8501 (JP)
• SHIMADA, Takashi
Kyoto-shi, Kyoto 612-8501 (JP)

(74) Representative: TBK
Bavariaring 4-6
80336 München (DE)

(54) **DISPLAY DEVICE, IMAGE FORMATION DEVICE, DISPLAY SYSTEM, AND VEHICLE**

(57) A display device includes a display panel, a first retarder, a semitransmissive mirror, a second retarder, and a reflective polarizer. The display panel emits display light. The first retarder faces the display panel. The second retarder is spaced from the first retarder. The reflective polarizer faces the second retarder to transmit first polarized light and reflect second polarized light. The semitransmissive mirror is between the first retarder and the second retarder and includes a reflective surface facing the second retarder. The first retarder and the second retarder convert the display light to the first polarized light and the second polarized light.

FIG. 2

**Description**

TECHNICAL FIELD

The present disclosure relates to a display device, an imaging device, a display system, and a vehicle.

BACKGROUND OF INVENTION

A known display device is described in, for example, Patent Literature 1.

CITATION LIST

PATENT LITERATURE

Patent Literature 1: Japanese Unexamined Patent Application Publication No. 2022-63533

SUMMARY

In an aspect of the present disclosure, a display device includes a display panel, a first retarder, a second retarder, a reflective polarizer, and a semitransmissive mirror. The display panel emits display light. The first retarder faces the display panel. The second retarder is spaced from the first retarder. The reflective polarizer faces the second retarder to transmit first polarized light and reflect second polarized light. The semitransmissive mirror is between the first retarder and the second retarder and includes a reflective surface facing the second retarder. The first retarder and the second retarder convert the display light to the first polarized light and the second polarized light.

In another aspect of the present disclosure, a display device includes a display panel, a first retarder, a second retarder, a first semitransmissive mirror, a second semitransmissive mirror, and a polarizer. The display panel emits display light. The first retarder transmits the display light. The second retarder is spaced from the first retarder. The first semitransmissive mirror is between the display panel and the first retarder and includes a first reflective surface facing the first retarder. The second semitransmissive mirror is between the first retarder and the second retarder and includes a second reflective surface facing the first retarder. The polarizer faces the second retarder. The first retarder and the second retarder convert the display light to first polarized light to be transmitted through the polarizer and second polarized light to be transmitted through the polarizer with less transmission than the first polarized light.

In another aspect of the present disclosure, a display device includes a display panel, a first retarder, a second retarder, a first semitransmissive mirror, a second semitransmissive mirror, and a third semitransmissive mirror. The display panel emits display light. The first retarder transmits the display light. The second retarder is spaced from the first retarder. The first semitransmissive mirror is between the display panel and the first retarder and includes a first reflective surface facing the first retarder. The second semitransmissive mirror is between the first retarder and the second retarder and includes a second reflective surface facing the first retarder and a third reflective surface facing the second retarder. The third semitransmissive mirror includes a fourth reflective surface facing the second retarder.

In another aspect of the present disclosure, an imaging device includes any of the above display devices.

In another aspect of the present disclosure, a display device includes a display panel, an optical system, and a housing. The optical system projects display light emitted from the display panel as a virtual image or a real image. The housing accommodates the display panel and the optical system. The housing includes a window that transmits light emitted from the optical system. The window, the optical system, and the display panel overlap one another when viewed through the window in the housing.

In another aspect of the present disclosure, a vehicle includes the above display device.

In another aspect of the present disclosure, a display device includes a display panel and a convex lens. The display panel emits display light. The convex lens transmits the display light. An optical path length from the display panel to the convex lens is shorter than a focal length of the convex lens.

In another aspect of the present disclosure, a display device includes a display panel and a convex lens. The display panel emits display light. The convex lens transmits the display light. An optical path length from the display panel to the convex lens is longer than a focal length of the convex lens.

In another aspect of the present disclosure, a display system includes any of the above display devices and a camera. The display panel is configured to communicate with the camera and display an image captured by the camera.

In another aspect of the present disclosure, a vehicle includes the above display system.

BRIEF DESCRIPTION OF THE DRAWINGS

The objects, features, and advantages of the present disclosure will become more apparent from the following detailed description and the drawings.

FIG. 1 is a schematic diagram of a display device according to one or more embodiments of the present disclosure.

FIG. 2 is a cross-sectional view of a display device according to one embodiment of the present disclosure, illustrating its main components in an example.

FIG. 3 is a cross-sectional view of a display device according to one embodiment of the present disclosure, illustrating its main components in another example.

FIG. 4 is a cross-sectional view of a display device according to another embodiment of the present disclosure, illustrating its main components in an example.

FIG. 5 is a cross-sectional view of a display device according to another embodiment of the present disclosure, illustrating its main components in another example.

FIG. 6 is a diagram describing projection of a virtual image in the display device in FIG. 4.

FIG. 7 is a diagram describing projection of a virtual image in the display device in FIG. 5.

FIG. 8 is a diagram describing the design of an optical system in the display device in FIG. 5.

FIG. 9 is a cross-sectional view of a display device according to still another embodiment of the present disclosure, illustrating its main components in an example.

FIG. 10 is a diagram of an imaging device according to one embodiment of the present disclosure, illustrating its structure in an example.

FIG. 11 is a diagram of an imaging device according to one embodiment of the present disclosure, illustrating its structure in another example.

FIG. 12 is a diagram of an imaging device according to one embodiment of the present disclosure, illustrating its structure in another example.

FIG. 13 is a top view describing another example display device.

FIG. 14 is a top view describing another example display device.

FIG. 15 is a cross-sectional view describing another example display device.

FIG. 16 is a cross-sectional view describing another example display device.

FIG. 17A is a diagram describing an optical system in another example display device.

FIG. 17B is a diagram describing an optical system in another example display device.

FIG. 17C is a diagram describing an optical system in another example display device.

FIG. 17D is a diagram describing an optical system in another example display device.

FIG. 18A is a diagram describing an optical system in another example display device.

FIG. 18B is a diagram describing an optical system in another example display device.

FIG. 18C is a diagram describing an optical system in another example display device.

FIG. 18D is a diagram describing an optical system in another example display device.

FIG. 19 is a graph describing an optical system in another example display device.

FIG. 20 is a cross-sectional view describing another example display device.

FIG. 21 is a cross-sectional view describing another example display device.

FIG. 22 is a cross-sectional view describing another example display device.

FIG. 23 is a cross-sectional view of a second semitransmissive mirror, illustrating its structure in an example.

FIG. 24 is a cross-sectional view describing another example display device.

FIG. 25 is a diagram describing the manner in which a virtual image appears to a user in front of the display device.

FIG. 26 is a diagram describing the manner in which a virtual image appears to a user not in front of the display device.

FIG. 27 is a diagram describing the manner in which a virtual image appears after the display device is adjusted.

FIG. 28 is a diagram describing the manner in which a virtual image appears after the display device is adjusted.

FIG. 29 is a flowchart describing control of the imaging device.

FIG. 30 is a cross-sectional view of a display device according to one embodiment of the present disclosure, illustrating its main components in another example.

FIG. 31 is a cross-sectional view of a display device according to another embodiment of the present disclosure, illustrating its main components in another example.

FIG. 32 is a cross-sectional view of a display device according to still another embodiment of the present disclosure, illustrating its main components in another example.

FIG. 33 is a perspective view of another example display device according to one embodiment of the present disclosure, illustrating its cross section.

FIG. 34 is a cross-sectional view of another example display device according to one embodiment of the present disclosure.

FIG. 35 is a perspective view of another example display device according to one embodiment of the present disclosure, illustrating its cross section.

FIG. 36 is a cross-sectional view of another example display device according to one embodiment of the present disclosure.

FIG. 37 is a diagram illustrating the optical path of display light in the display device in FIG. 2.

FIG. 38 is a cross-sectional view of another example of the display device in FIG. 2.

FIG. 39 is a diagram of a display system and a vehicle according to one embodiment of the present disclosure, illustrating their structures in an example.

DESCRIPTION OF EMBODIMENTS

Various small display devices have been proposed for, for example, a digital rearview mirror installed in a vehicle or a head-mounted display mountable on a user's head. A display device described in Patent Literature 1 is configured to emit display light from a display panel through multiple optical members, such as retarders and a reflective polarizer.
Such a known display device may easily undergo, for example, deformation or misalignment of its optical members, possibly reducing display quality.

One or more embodiments of the present disclosure will now be described with reference to the drawings. The drawings used hereafter may be schematic. The drawings used hereafter illustrate the main components of a display device and a virtual image display device according to one or more embodiments of the present disclosure. In one or more embodiments of the present disclosure, a display device and a virtual image display device may include known components that are not illustrated, such as a holder of an optical system and a housing. Some of the figures herein use an orthogonal XYZ coordinate system defined for convenience. A Y-direction is also referred to as a height direction. A Z-direction is also referred to as an emission direction or a depth direction.

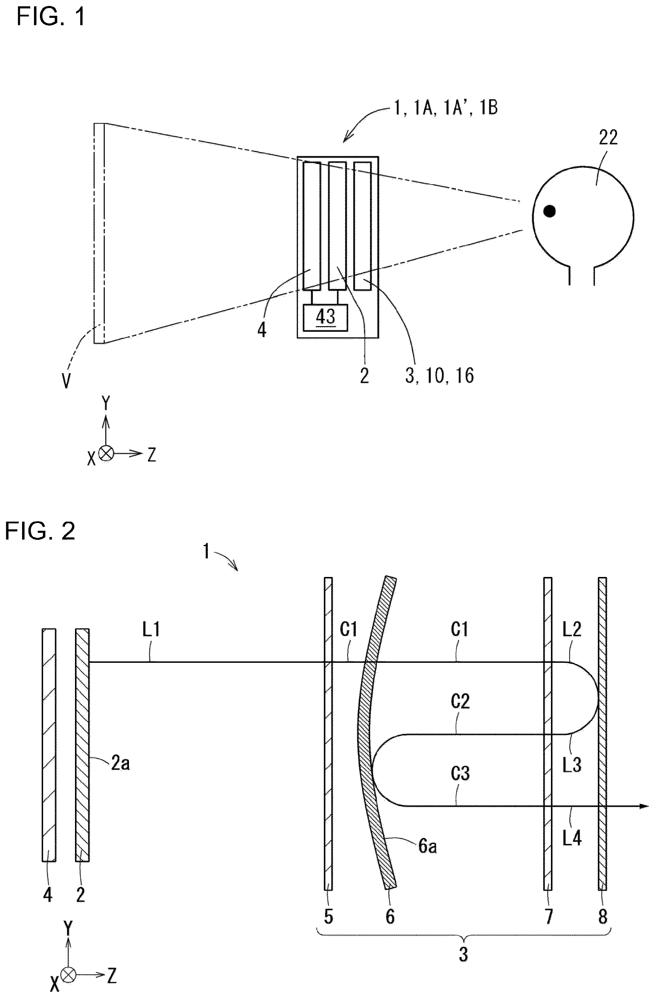

FIGs. 1 to 39 are diagrams and a graph describing a display device, an imaging device, a display system, and a vehicle according to one or more embodiments of the present disclosure. For ease of illustration, the optical path of light incident on a light-reflective optical member and the optical path of light reflected by the optical member are shifted from each other in the height direction (Y-direction) in FIGs. 2 to 5, 9, 15, 16, 20 to 22, 24, and 30 to 32.

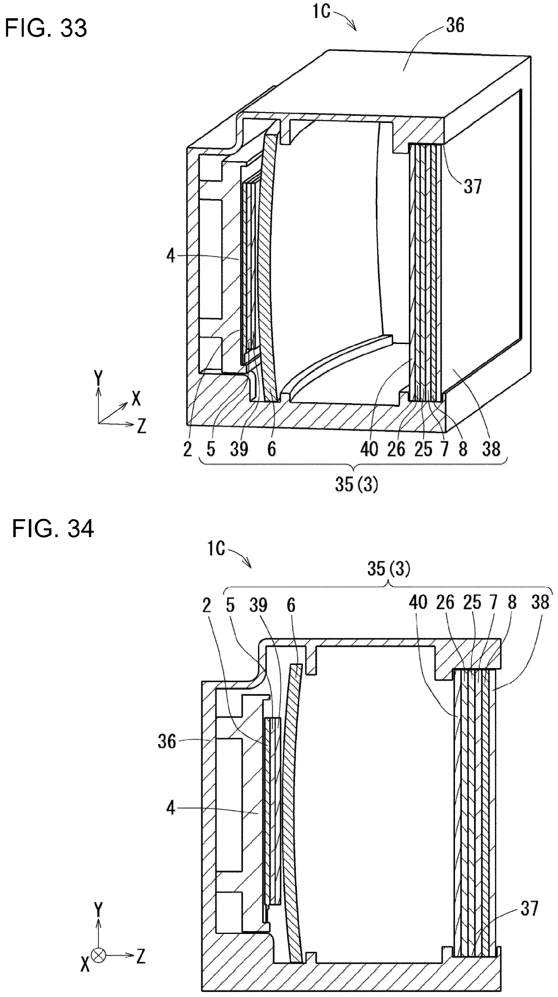

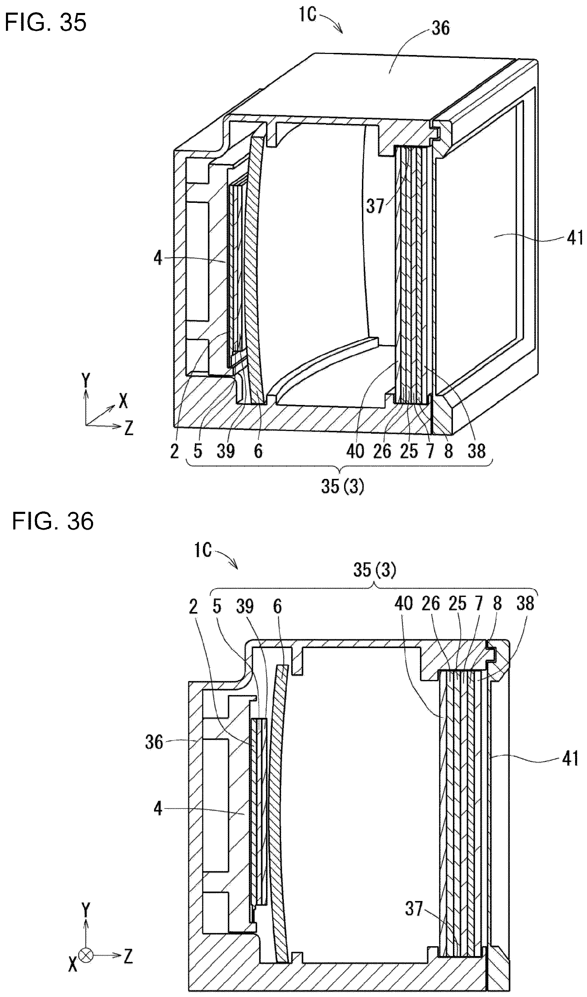

In one embodiment of the present disclosure, as illustrated in FIG. 1, a display device 1 includes a display panel 2 and an optical system 3. The display device 1 causes a part of the display light emitted from the display panel 2 to be incident on the eyes of a user 22 and allow the user 22 to view the display light as a formed image, a picture, or an aerial image. The display device 1 allows the user 22 to view the display on the display panel 2, or in other words, the display light emitted from the display panel 2, at a position different from the position of the display panel 2. In one embodiment of the present disclosure, the display device 1 allows the user 22 to view the display light as a virtual image V. The virtual image V may be formed at a position farther than the display device 1 as viewed from the user 22. The virtual image V may be a magnified erect virtual image of the display on the display panel 2. When the display device 1 includes a housing (refer to FIGs. 33 to 36) accommodating the display panel 2 and the optical system 3, the virtual image V may be formed inside the housing or outside the housing. The virtual image V may be formed at a position farther than or nearer than the display panel 2 as viewed from the user 22. When the housing includes a window 37 (refer to FIGs. 33 to 36) that transmits the display light emitted from the optical system 3, the virtual image V may be formed at a position farther than or nearer than the window 37 (a light-transmissive plate 38) as viewed from the user 22. When the display device 1 includes a touchscreen 41 (refer to FIGs. 35 and 36), the virtual image V may be formed at a position farther than or nearer than the touchscreen 41 as viewed from the user 22.

Note that the display device 1 may be configured to cause a part of the display light emitted from the display panel 2 to be incident on the eyes of the user 22 and allow the user 22 to view the display light as a real image. The real image may be formed at a position nearer than the display device 1 as viewed from the user 22. When the display device 1 includes a housing 36 (refer to FIGs. 33 to 36) accommodating the display panel 2 and the optical system 3, the real image may be formed inside the housing 36 or outside the housing 36. The real image may be formed at a position farther than or nearer than the display panel 2 as viewed from the user 22. When the housing 36 includes the window 37 (refer to FIGs. 33 to 36) that transmits the display light emitted from the optical system 3, the real image may be formed at a position farther than or nearer than the window 37 (the light-transmissive plate 38) as viewed from the user 22. When the display device 1 includes the touchscreen 41 (refer to FIGs. 35 and 36), the real image may be formed at a position farther than or nearer than the touchscreen 41 as viewed from the user 22.

The display panel 2 includes a display surface 2a to display an image. In other words, the display panel 2 emits display light of the displayed image from the display surface 2a. The display panel 2 may be configured to emit linearly polarized light as the display light. Although the display panel 2 emits s-polarized light as the display light in the example described below, the display light is not limited to this.

The display panel 2 may be a liquid crystal panel. The liquid crystal panel may have a structure of any known liquid crystal panel. A known liquid crystal panel may be, for example, an in-plane switching (IPS) panel, a fringe field switching (FFS) panel, a vertical alignment (VA) panel, or an electrically controlled birefringence (ECB) panel.

The display device 1 may include an illuminator 4 that illuminates the display panel 2 in a planar manner. The illuminator 4 is also referred to as a backlight. The illuminator 4 may be an edge-lit backlight or a direct backlight. The edge-lit backlight includes one or more light sources arranged at the outer periphery of the display panel 2. The light emitted from the light sources is guided by a light guide plate and evenly distributed over the entire back surface of the display panel 2. The direct backlight includes an array of light sources on the back surface of the display panel 2. The light emitted from the light sources illuminates the display panel 2. The light sources in the illuminator 4 may be, for example, cold cathode fluorescent lamps, halogen lamps, or xenon lamps, or may be light-emitting diodes (LEDs), organic LEDs (OLEDs), or laser diodes (LDs). The light sources in the illuminator 4 may be LDs, which can emit highly monochromatic light, to facilitate the design of the optical system 3, particularly, an optical member with wavelength-dependent optical properties.

The display panel 2 is not limited to the liquid crystal panel (transmissive display panel). The display panel 2 may be a self-luminous display panel including self-luminous light emitters, such as LEDs, OLEDs, and LDs.

The optical system 3 projects the display light emitted from the display panel 2 in the field of view of the user 22 as the virtual image V. As illustrated in FIG. 2, the optical system 3 may include a first retarder 5, a semitransmissive mirror 6, a second retarder 7, and a reflective polarizer 8. The first retarder 5, the semitransmissive mirror 6, the second retarder 7, and the reflective polarizer 8 are arranged in this order in the emission direction (positive Z-direction) of the display light from the display panel 2.

The first retarder 5 faces the display surface 2a of the display panel 2. The first retarder 5 is spaced from the display surface 2a in the emission direction of the display light from the display panel 2. The second retarder 7 is spaced from the first retarder 5 in the emission direction of the display light from the display panel 2. The first retarder 5 and the second retarder 7 are quarter-wave plates. Each of the first retarder 5 and the second retarder 7 introduces a quarter-wavelength phase difference to the polarization plane of incident light (the polarization plane in a vibration direction of the electric field). This allows a part of the display light emitted from the display panel 2 to be reflected by the reflective polarizer 8 and incident on the semitransmissive mirror 6.

Each of the first retarder 5 and the second retarder 7 may have any structure that can introduce an intended phase difference to light that has been transmitted through the first retarder 5 and the second retarder 7 to cause the light to be reflected by the reflective polarizer 8 after being transmitted through the first retarder 5 and the second retarder 7. More specifically, when the polarized light transmitted through the first retarder 5 and the second retarder 7 is referred to as second polarized light, the first retarder 5 and the second retarder 7 may be, for example, waveplates other than quarter-wave plates or a combination of a quarter-wave plate and another waveplate that can produce such second polarized light. Note that, in one or more embodiments of the present disclosure described below, the first retarder 5 and the second retarder 7 are quarter-wave plates.

The second retarder 7 may have any structure that can introduce an intended phase difference to light that has been transmitted through the second retarder 7 to cause the light to be transmitted through the reflective polarizer 8 when the light reaches the reflective polarizer 8 again after being reflected by the reflective polarizer 8 and transmitted through the second retarder 7. More specifically, when the polarized light reflected by the reflective polarizer 8 and then transmitted through the second retarder 7 is referred to as first polarized light, the second retarder 7 may be, for example, a waveplate other than a quarter-wave plate that can produce such first polarized light.

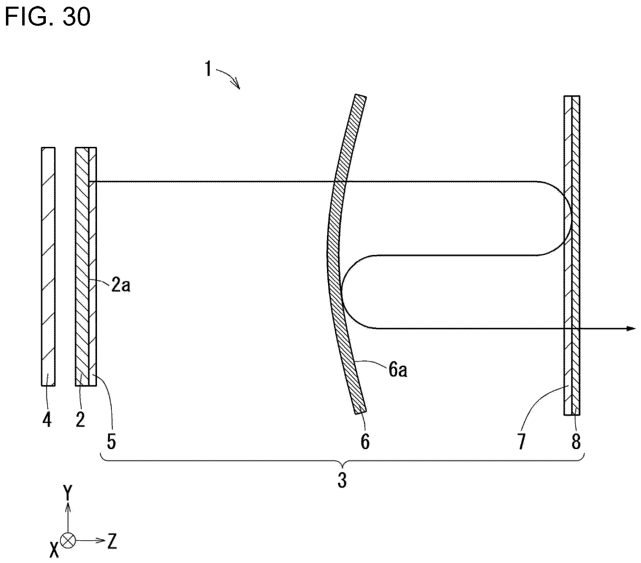

As illustrated in FIG. 30, the first retarder 5 may be integral with the display panel 2. Note that, being "integral" may refer to two members being placed in contact with each other or joined together with an optically transparent adhesive, such as an optically clear adhesive (OCA).

The semitransmissive mirror 6 is located between the first retarder 5 and the second retarder 7. The semitransmissive mirror 6 may transmit a part (e.g., substantially 50%) of incident light and reflect the remaining part (e.g., substantially 50%). The semitransmissive mirror 6 reflects a part of the display light reflected by the reflective polarizer 8 and causes the reflected light to be incident on the eyes of the user 22. This allows the user 22 to view the virtual image V. As illustrated in FIG. 2, the semitransmissive mirror 6 may be a concave mirror including a concave reflective surface 6a facing the second retarder 7. The reflective surface 6a of the semitransmissive mirror 6 may at least partly have a spherical shape, an aspherical shape, or a freeform shape.

The semitransmissive mirror 6 includes, for example, a substrate and a semitransmissive reflective layer on a surface of the substrate. The substrate may have a transmittance of 100% or substantially 100% to light in the visible light region. The substrate may be made of, for example, a resin material or a glass material. The resin material may be, for example, an acrylic resin or a polycarbonate resin. The semitransmissive reflective layer may be a metal thin film. The metal thin film may be made of a metal material such as aluminum or chromium. The semitransmissive reflective layer is not limited to a metal thin film, and may be, for example, a dielectric multilayer film. The semitransmissive mirror 6 may be configured to reflect light with its semitransmissive reflective layer. The semitransmissive reflective layer may be on the surface of the substrate facing the second retarder 7.

The reflective polarizer 8 faces the surface of the second retarder 7 opposite to the surface facing the semitransmissive mirror 6. In other words, the reflective polarizer 8 is located downstream from the second retarder 7 in the emission direction of the display light from the display panel 2. The reflective polarizer 8 may transmit a part of incident light and reflect the remaining part. In the present embodiment, the reflective polarizer 8 is configured to reflect polarized light (also referred to as p-polarized light or second polarized light) having a polarization axis perpendicular to the polarization axis of the display light, and transmit polarized light (also referred to as s-polarized light or first polarized light) having a polarization axis parallel to the polarization axis of the display light. This allows the user 22 to view the virtual image V. As illustrated in FIG. 30, the reflective polarizer 8 may be integral with the second retarder 7.

The reflective polarizer 8 may be, for example, a wire-grid polarizer including a substrate and multiple thin metal wires (also referred to as a metal nanowire grid) on a surface of the substrate. The substrate may have a transmittance of 100% or substantially 100% to light in the visible light region. The substrate may be made of, for example, a resin material or a glass material. The thin metal wires may be made of a metal material such as aluminum, chromium, or titanium oxide. The thin metal wires may be arranged in one direction. The reflective polarizer 8 can transmit an optical component vibrating in a direction perpendicular to the grid, and reflect an optical component vibrating in a direction parallel to the grid.

The display device 1 includes a controller 43. The controller 43 is connected to and controls each of the components of the display device 1. The controller 43 may control the illuminator 4. The controller 43 may control an image displayed on the display panel 2 and control the illuminator 4. The controller 43 may control the illuminator 4 based on the image displayed on the display panel 2. The controller 43 may include one or more processors. The processors may include a general-purpose processor configured to cause reading of a specific program to perform a specific function, and a processor dedicated to specific processing. The processors may include a programmable logic device (PLD). The controller 43 may be a system on a chip (SoC) or a system in a package (SiP) in which one or more processors cooperate with one another. The controller 43 includes a storage that may store, for example, various items of information or a program for causing each of the components of the display device 1 to operate. The storage may be, for example, a semiconductor memory. The storage may function as a work memory for the controller 43.

The optical function of the optical system 3 will now be described. The display panel 2 emits s-polarized light (first linearly polarized light L1) as the display light. The first linearly polarized light L1 as the display light emitted from the display panel 2 is transmitted through the first retarder 5 to be converted to first circularly polarized light C1. A part (e.g., substantially 50%) of the first circularly polarized light C1 resulting from transmission through the first retarder 5 is transmitted through the semitransmissive mirror 6. The first circularly polarized light C1 transmitted through the semitransmissive mirror 6 is then transmitted through the second retarder 7 to be converted to second linearly polarized light L2 (in other words, p-polarized light) having a polarization direction perpendicular to the polarization direction of the first linearly polarized light L1. The second linearly polarized light L2 is incident on the reflective polarizer 8. As described above, the reflective polarizer 8 reflects p-polarized light and transmits s-polarized light. The second linearly polarized light L2 incident on the reflective polarizer 8 is reflected by the reflective polarizer 8 to be converted to third linearly polarized light L3. The third linearly polarized light L3 is transmitted through the second retarder 7 to be converted to second circularly polarized light C2. A part (e.g., substantially 50%) of the second circularly polarized light C2 resulting from transmission through the second retarder 7 is reflected by the semitransmissive mirror 6 to be converted to third circularly polarized light C3. The third circularly polarized light C3 is transmitted through the second retarder 7 to be converted to fourth linearly polarized light L4 (in other words, s-polarized light) having a polarization direction parallel to the polarization direction of the first linearly polarized light L1. The fourth linearly polarized light L4 is transmitted through the reflective polarizer 8 and emitted outside. The amount (luminance) of light emitted from the display device 1 is, for example, substantially 25% of the amount (luminance) of the display light emitted from the display panel 2.

The first retarder 5, the semitransmissive mirror 6, the second retarder 7, and the reflective polarizer 8 are held by a holder (not illustrated) to maintain their relative positions. The first retarder 5 and the second retarder 7 are spaced from each other with air between the first retarder 5 and the second retarder 7 (more specifically, the first retarder 5 and the semitransmissive mirror 6 are spaced from each other with air between the first retarder 5 and the semitransmissive mirror 6, and the semitransmissive mirror 6 and the second retarder 7 are spaced from each other with air between the semitransmissive mirror 6 and the second retarder 7). The display device 1 includes no member made of a resin material, such as a polymer, between the first retarder 5 and the second retarder 7. This can eliminate the likelihood of, for example, deformation of the semitransmissive mirror 6 or misalignment between the semitransmissive mirror 6 and the first retarder 5 or between the semitransmissive mirror 6 and the second retarder 7 that may occur when a resin material is cured in the manufacturing process of the display device 1. The resin material, such as a polymer, has retardation specific to the material. The above structure can thus also eliminate the likelihood that such a resin material changes the polarization state of light transmitted through the resin material. This can reduce deterioration in display quality.

The optical system 3 is a single-axis (on-axis) optical system in which the optical axis of incident light is substantially aligned with the optical axis of emitted light. The optical system 3 thus uses a smaller space, allowing the display device 1 to be smaller. The single-axis optical system 3 can reduce, for example, distortion or uneven luminance of the virtual image V viewed by the user 22. This also facilitates the design of the optical system 3.

In the display device 1, the optical path length of light emitted from the display panel 2, transmitted through the semitransmissive mirror 6, reflected by the reflective polarizer 8, and reaching the semitransmissive mirror 6 may be shorter than the focal length of the semitransmissive mirror 6. This structure allows the user 22 to view the virtual image V. In the display device 1, the optical path length of light emitted from the display panel 2, transmitted through the semitransmissive mirror 6, reflected by the reflective polarizer 8, and reaching the semitransmissive mirror 6 may be longer than the focal length of the semitransmissive mirror 6. This structure allows the user 22 to view the real image.

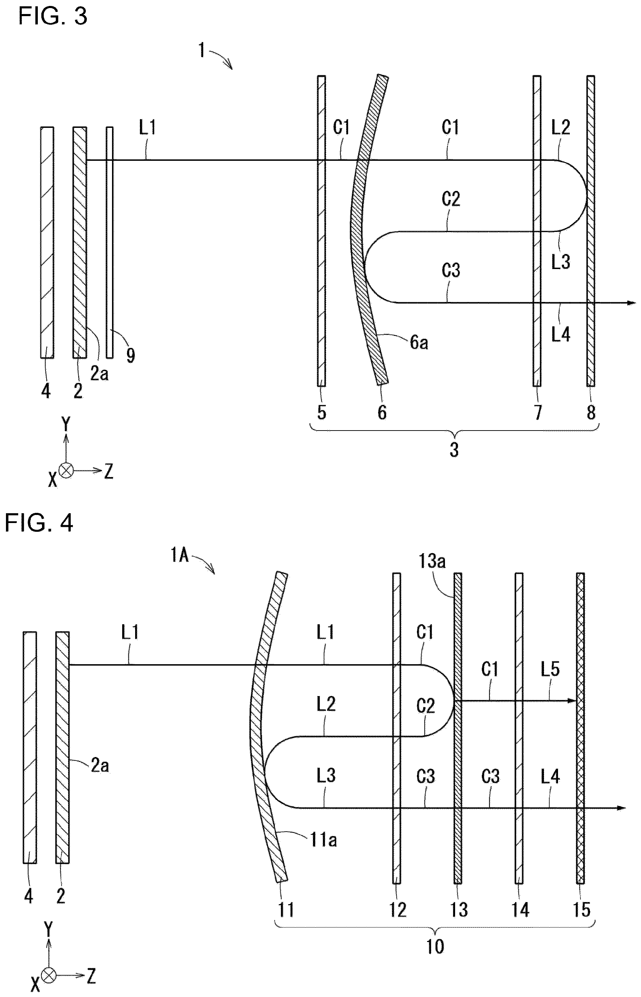

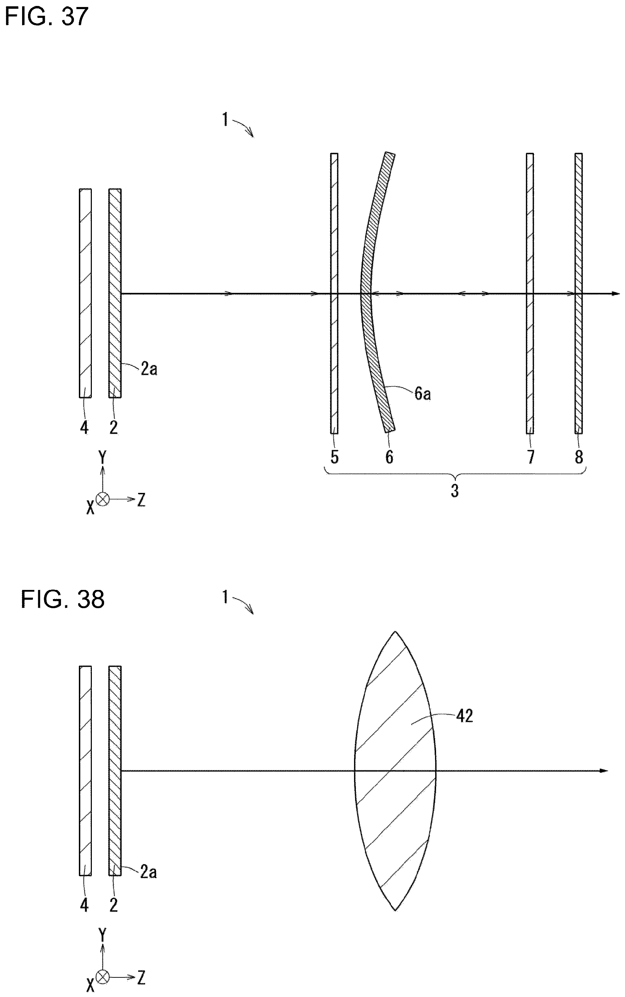

In FIG. 2, for ease of illustration, the optical path of light incident on the reflective polarizer 8 and the optical path of light reflected by the reflective polarizer 8 are shifted from each other in the height direction (Y-direction). The optical path of light incident on the semitransmissive mirror 6 and the optical path of light reflected by the semitransmissive mirror 6 are also shifted from each other in the height direction (Y-direction). However, the display light emitted from the display panel 2 actually travels substantially along a single axis as illustrated in FIG. 37. FIGs. 3 to 5, 9, 15, 16, 20 to 22, 24, and 30 to 32 illustrate the optical path in the same or a similar manner.

As illustrated in FIG. 38, the display device 1 may include a convex lens 42 in place of the first retarder 5, the semitransmissive mirror 6, the second retarder 7, and the reflective polarizer 8. In the display device 1, the optical path length from the display panel 2 to the convex lens 42 may be shorter than the focal length of the convex lens 42. This structure allows the user 22 to view the virtual image V. In the display device 1, the optical path length from the display panel 2 to the convex lens 42 may be longer than the focal length of the convex lens 42. This structure allows the user 22 to view the real image.

The display panel 2 may display a composite image including a left-eye image and a right-eye image having parallax between these images, and may emit display light of the composite image. As illustrated in FIG. 3, the display device 1 may include an optical element 9 located on the optical path of the display light emitted from the display panel 2. The optical element 9 is configured to cause a part of the display light of the composite image to reach one of the left eye or the right eye of the user 22 and cause another part of the display light to reach the other of the left eye or the right eye of the user 22. The optical element 9 is configured to define the traveling direction of the display light of the left-eye image and the traveling direction of the display light of the right-eye image to cause at least a part of the display light of the left-eye image to reach the left eye of the user 22 and cause at least a part of the display light of the right-eye image to reach the right eye of the user 22. The display device 1 thus allows the user 22 to view a stereoscopic image.

The optical element 9 may have any structure that causes a part of the display light of the composite image to reach one of the left eye or the right eye of the user 22 and causes another part of the display light to reach the other of the left eye or the right eye of the user 22. For example, the optical element 9 may be a parallax barrier or a lenticular lens. The parallax barrier may be a liquid crystal panel. The optical element 9 may be at any position in the display device 1. The optical element 9 may be located between the display panel 2 and the first retarder 5, may be located downstream from the reflective polarizer 8 in the emission direction of the display light, or may be located between the semitransmissive mirror 6 and the second retarder 7.

A display device according to another embodiment of the present disclosure will now be described. The display device according to the present embodiment differs from the display device according to the above embodiment in the structure of the optical system. The other components that are the same as or similar to the components of the display device according to the above embodiment are denoted by the same reference numerals and will not be described in detail.

In the present embodiment, as illustrated in FIG. 4, a display device 1A includes the display panel 2 and an optical system 10. The display panel 2 includes the display surface 2a to display an image. The optical system 10 projects display light emitted from the display panel 2 in the field of view of the user 22 as the virtual image V.

The optical system 10 includes a first semitransmissive mirror 11, a first retarder 12, a second semitransmissive mirror 13, a second retarder 14, and a polarizer 15. The first semitransmissive mirror 11, the first retarder 12, the second semitransmissive mirror 13, the second retarder 14, and the polarizer 15 are arranged in this order in the emission direction of the display light from the display panel 2.

The first retarder 12 faces a reflective surface 11a of the first semitransmissive mirror 11. The first retarder 12 is spaced from the display surface 2a in the emission direction of the display light from the display panel 2. The second retarder 14 is spaced from the first retarder 12 in the emission direction of the display light. The first retarder 12 and the second retarder 14 are quarter-wave plates.

The first semitransmissive mirror 11 is located between the display panel 2 and the first retarder 12. The first semitransmissive mirror 11 may transmit a part of incident light and reflect the remaining part. As illustrated in FIG. 4, the first semitransmissive mirror 11 is a concave mirror including a concave reflective surface 11a facing the first retarder 12. In the present embodiment, the first semitransmissive mirror 11 may be configured to transmit s-polarized light and reflect p-polarized light. The reflective surface 11a of the first semitransmissive mirror 11 may at least partly have a spherical shape, an aspherical shape, or a freeform shape.

The first semitransmissive mirror 11 may include, for example, a substrate and multiple thin metal wires (a metal nanowire grid) on a surface of the substrate. The substrate may have a transmittance of 100% or substantially 100% to light in the visible light region. The substrate may be made of, for example, a resin material or a glass material. The resin material may be, for example, an acrylic resin or a polycarbonate resin. The thin metal wires may be made of a metal material such as aluminum, chromium, or titanium oxide. The thin metal wires may be arranged in one direction. The first semitransmissive mirror 11 can transmit an optical component vibrating in a direction perpendicular to the grid, and reflect an optical component vibrating in a direction parallel to the grid. The metal nanowire grid may be on the surface of the substrate adjacent to the first retarder 12. Note that, although the first semitransmissive mirror 11 includes the metal nanowire grid to function as a reflective polarizer in this example, the first semitransmissive mirror 11 may simply be a semitransparent mirror, with a reflective polarizer being separate from the first semitransmissive mirror 11.

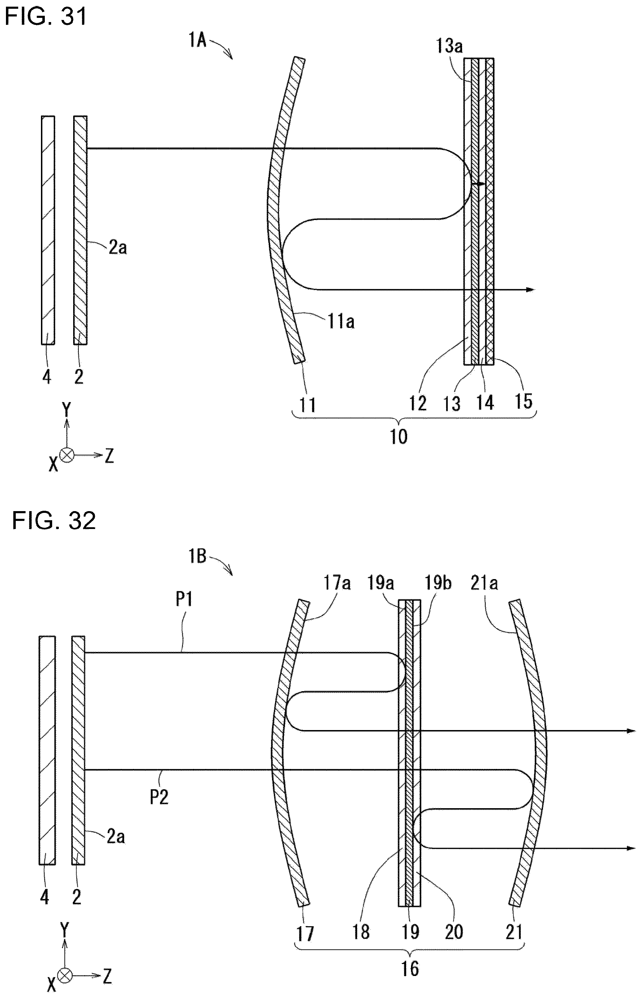

The second semitransmissive mirror 13 is located between the first retarder 12 and the second retarder 14. The second semitransmissive mirror 13 may transmit a part (e.g., substantially 50%) of incident light and reflect the remaining part (e.g., substantially 50%). As illustrated in FIG. 4, the second semitransmissive mirror 13 may be a plane mirror including a reflective surface 13a facing the first retarder 12. The second semitransmissive mirror 13 is also referred to as a plane semitransparent mirror. As illustrated in FIG. 31, the second semitransmissive mirror 13 may be integral with at least one of the first retarder 12 or the second retarder 14.

The second semitransmissive mirror 13 may include, for example, a substrate and a semitransmissive reflective layer on a surface of the substrate. The substrate may have a transmittance of 100% or substantially 100% to light in the visible light region. The substrate may be made of, for example, inorganic glass or a resin material. The resin material may be, for example, an acrylic resin or a polycarbonate resin. The semitransmissive reflective layer may be a metal thin film. The metal thin film may be made of a metal material such as aluminum or chromium. The semitransmissive reflective layer is not limited to a metal thin film, and may be, for example, a dielectric multilayer film.

The polarizer 15 faces the surface of the second retarder 14 opposite to the surface facing the second semitransmissive mirror 13. In other words, the polarizer 15 is located downstream from the second retarder 14 in the emission direction of the display light from the display panel 2. The polarizer 15 may transmit a part of incident light and absorb the remaining part. In the present embodiment, the polarizer 15 is configured to transmit p-polarized light and absorb s-polarized light. As illustrated in FIG. 31, the polarizer 15 may be integral with the second retarder 14.

The polarizer 15 may be any of known absorptive polarizers. Examples of the known absorptive polarizers may include an iodine polarizer including a polyvinyl alcohol (PVA) film with an oriented iodine compound adsorbed or a dye polarizer including a PVA film with an oriented dichromatic organic dye adsorbed.

The optical function of the optical system 10 will now be described. The s-polarized light (first linearly polarized light L1) as the display light emitted from the display panel 2 is transmitted through the first semitransmissive mirror 11. The first linearly polarized light L1 as the display light is transmitted through the first retarder 12 to be converted to first circularly polarized light C1. The first circularly polarized light C1 is incident on the second semitransmissive mirror 13. A part (e.g., substantially 50%) of the first circularly polarized light C1 is reflected by the second semitransmissive mirror 13 to be converted to second circularly polarized light C2. The second circularly polarized light C2 is transmitted through the first retarder 12 to be converted to second linearly polarized light L2 (in other words, p-polarized light) having a polarization direction perpendicular to the polarization direction of the first linearly polarized light L1. The second linearly polarized light L2 is reflected by the first semitransmissive mirror 11 to be converted to third linearly polarized light L3 having a polarization direction perpendicular to the polarization direction of the first linearly polarized light L1. The third linearly polarized light L3 is transmitted through the first retarder 12 to be converted to third circularly polarized light C3. A part (e.g., substantially 50%) of the third circularly polarized light C3 is transmitted through the second semitransmissive mirror 13. The third circularly polarized light C3 transmitted through the second semitransmissive mirror 13 is then transmitted through the second retarder 14 to be converted to fourth linearly polarized light L4 (in other words, p-polarized light) having a polarization direction perpendicular to the polarization direction of the first linearly polarized light L1. The fourth linearly polarized light L4 is transmitted through the polarizer 15 and emitted outside.

The remaining part (e.g., substantially 50%) of the first circularly polarized light C1 is transmitted through the second semitransmissive mirror 13 and then through the second retarder 14 to be converted to fifth linearly polarized light L5 (in other words, s-polarized light) having a polarization direction parallel to the polarization direction of the first linearly polarized light L1. The fifth linearly polarized light L5 is absorbed by the polarizer 15 rather than being emitted outside. In other words, the fifth linearly polarized light L5 has a lower transmittance through the polarizer 15. The amount (luminance) of light emitted from the display device 1A is, for example, substantially 25% of the amount (luminance) of the display light emitted from the display panel 2.

Note that, although the first retarder 12 and the second retarder 14 are quarter-wave plates in the above example, the first retarder 12 and the second retarder 14 may be, for example, waveplates other than quarter-wave plates or a combination of a quarter-wave plate and another waveplate that allows a part of light to be absorbed by the polarizer 15 and another part of the light to be transmitted through the polarizer 15. The first retarder 12 and the second retarder 14 may be, for example, waveplates other than quarter-wave plates or a combination of a quarter-wave plate and another waveplate that allows a part of light to be reflected by the first semitransmissive mirror 11 and another part of the light to be transmitted through the first semitransmissive mirror 11.

The first semitransmissive mirror 11, the first retarder 12, the second semitransmissive mirror 13, the second retarder 14, and the polarizer 15 are held by a holder (not illustrated) to maintain their relative positions. The first semitransmissive mirror 11 and the first retarder 12 are spaced from each other with air between the first semitransmissive mirror 11 and the first retarder 12. The display device 1A includes no member made of a resin material, such as a polymer, between the first semitransmissive mirror 11 and the first retarder 12. This can eliminate the likelihood of, for example, deformation of the first semitransmissive mirror 11 or misalignment between the first semitransmissive mirror 11 and the first retarder 12 that may occur when a resin material is cured in the manufacturing process of the display device 1A. This can reduce deterioration in display quality.

The optical system 10 is a single-axis (on-axis) optical system in which the optical axis of incident light is substantially aligned with the optical axis of emitted light. The optical system 10 thus uses a smaller space, allowing the display device 1A to be smaller. The single-axis optical system 10 can reduce, for example, distortion or uneven luminance of the virtual image V viewed by the user 22. This also facilitates the design of the optical system 10.

The display device 1A may include the optical element 9 in the same manner as or in a similar manner to the display device 1. With this structure, the display device 1A allows the user 22 to view the stereoscopic image. The optical element 9 may be located between the display panel 2 and the first semitransmissive mirror 11, may be located downstream from the polarizer 15 in the emission direction of the display light, or may be located between the first semitransmissive mirror 11 and the first retarder 12.

Another example of the display device 1A will now be described. A display device 1A' in this example differs from the display device 1A described above in the structure (shape) of the second semitransmissive mirror. The other components that are the same as or similar to the components of the display device 1A are denoted by the same reference numerals and will not be described in detail.

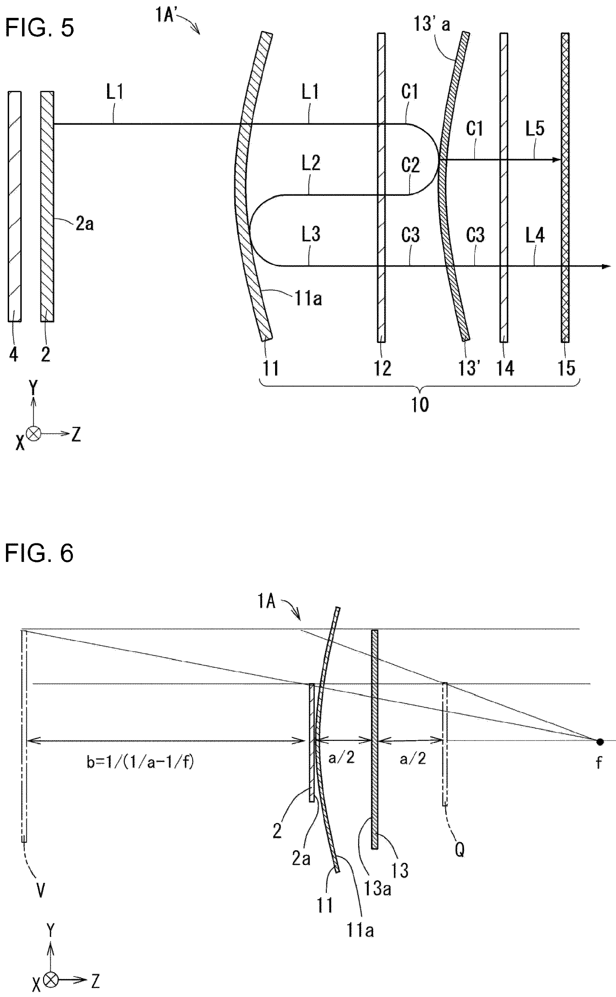

In this example, as illustrated in FIG. 5, the display device 1A' includes the display panel 2 and the optical system 10. The optical system 10 includes the first semitransmissive mirror 11, the first retarder 12, a second semitransmissive mirror 13', the second retarder 14, and the polarizer 15. The first semitransmissive mirror 11, the first retarder 12, the second semitransmissive mirror 13', the second retarder 14, and the polarizer 15 are arranged in this order in the emission direction of the display light from the display panel 2.

The second semitransmissive mirror 13' includes a convex reflective surface 13'a facing the first retarder 12. The second semitransmissive mirror 13' is also referred to as a convex semitransparent mirror. The second semitransmissive mirror 13' may transmit a part (e.g., substantially 50%) of incident light and reflect the remaining part (e.g., substantially 50%).

The second semitransmissive mirror 13' may include, for example, a substrate and a semitransmissive reflective layer on a surface of the substrate. The substrate may have a transmittance of 100% or substantially 100% to light in the visible light region. The substrate may be made of, for example, inorganic glass or a resin material. The resin material may be, for example, an acrylic resin or a polycarbonate resin. The semitransmissive reflective layer may be a metal thin film. The metal thin film may be made of a metal material such as aluminum or chromium. The semitransmissive reflective layer is not limited to a metal thin film, and may be, for example, a dielectric multilayer film.

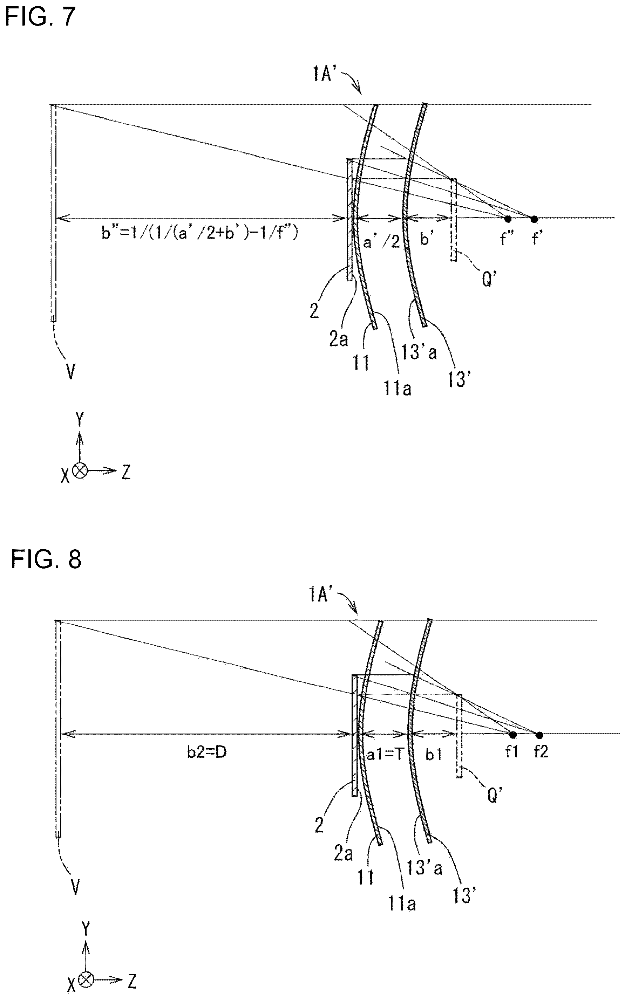

In the optical system 10, the focal length of the second semitransmissive mirror 13' may be longer than the distance between the display panel 2 and the second semitransmissive mirror 13'. In other words, the optical system 10 may be configured to project a virtual image Q' (refer to FIG. 7) that is a reduced image of an object (specifically, the display surface 2a) onto the second semitransmissive mirror 13'. Further, in the optical system 10, the focal length of the first semitransmissive mirror 11 may be longer than the distance between the virtual image Q' and the first semitransmissive mirror 11. In other words, the optical system 10 may be configured to project the virtual image V that is a magnified image of an object (specifically, the virtual image Q') onto the first semitransmissive mirror 11. This structure can reduce the thickness of the optical system 10 in the depth direction (Z-direction), and also allows adjustment of the magnification factor and the projection distance of the virtual image V.

The first semitransmissive mirror 11, the first retarder 12, the second semitransmissive mirror 13', the second retarder 14, and the polarizer 15 are held by a holder (not illustrated) to maintain their relative positions. The first semitransmissive mirror 11 and the first retarder 12 are spaced from each other with air between the first semitransmissive mirror 11 and the first retarder 12. The display device 1A' includes no member made of a resin material, such as a polymer, between the first semitransmissive mirror 11 and the first retarder 12. This can eliminate the likelihood of, for example, deformation of the first semitransmissive mirror 11 or misalignment between the first semitransmissive mirror 11 and the first retarder 12 that may occur when a resin material is cured in the manufacturing process of the display device 1A'. This can reduce deterioration in display quality.

The optical system 10 is a single-axis (on-axis) optical system in which the optical axis of incident light is substantially aligned with the optical axis of emitted light. The optical system 10 thus uses a smaller space, allowing the display device 1A' to be smaller. The single-axis optical system 10 can reduce, for example, distortion or uneven luminance of the virtual image V viewed by the user 22. This also facilitates the design of the optical system 10.

The display device 1A' may include the optical element 9. This structure allows the user 22 to view a stereoscopic virtual image V.

In this example, the optical system 10 can be thinner in the depth direction (Z-direction), thus allowing the display device 1A' to be thinner. Achieving the thinner optical system 10 will now be described with reference to FIGs. 6 and 7. Note that, in the display device 1A or 1A', the reflective surface 11a of the first semitransmissive mirror 11 that reflects the display light to be emitted outside is concave. The first semitransmissive mirror 11 may thus be hereafter referred to as a concave mirror. In the display device 1A, the reflective surface 13a of the second semitransmissive mirror 13 that reflects the display light to be emitted outside is planar. The second semitransmissive mirror 13 may thus be hereafter referred to as a plane mirror. In the display device 1A', the reflective surface 13'a of the second semitransmissive mirror 13' that reflects the display light to be emitted outside is convex. The second semitransmissive mirror 13' may thus be hereafter referred to as a convex mirror. The dimension of the optical system 10 in the depth direction (Z-direction) may be referred to as the thickness of the optical system 10.

FIG. 6 is a diagram describing projection of the virtual image V in the display device 1A. FIG. 6 does not illustrate the illuminator 4 and the optical members (the first retarder 12, the second retarder 14, and the polarizer 15) that do not contribute to the projection distance of the virtual image V (virtual image distance) or do not contribute to the magnification factor of the virtual image V. In the figure, the concave mirror 11 is in contact with the display panel 2 to define the distance between the concave mirror 11 and the display panel 2 to be substantially "zero". In the example described below, the focal length of the concave mirror 11 is denoted by f. The distance between the concave mirror 11 and the plane mirror 13 is denoted by a/2. The distance a/2 corresponds to the thickness of the optical system 10 in the display device 1A.

The display device 1A is configured to magnify, using the concave mirror 11, a virtual image Q of the display surface 2a produced with the plane mirror 13, and to project the magnified image as the virtual image V. As illustrated in FIG. 6, the virtual image Q is located opposite to the concave mirror 11 from the plane mirror 13, and is located at the distance a/2 from the plane mirror 13. The virtual image Q is an image of the display surface 2a at the magnification of 1x (actual size).

A virtual image distance b of the virtual image V and a virtual image magnification factor m of the virtual image V are respectively expressed by Formulas 1 and 2 below. Note that the virtual image distance b is the distance between the virtual image V and the concave mirror 11. The virtual image magnification factor m is the magnification factor by which the display surface 2a is magnified to form the virtual image V.

$$b = 1/(1/a - 1/f) \qquad (1)$$

$$m = b/a \qquad (2)$$

Table 1

| Example structure | Focal length f | Thickness a/2 | Virtual image distance b | Virtual image magnification factor m |
|---|---|---|---|---|
| 1 | 200 | 50 | 200 | 2.0 |
| 2 | 101 | 33.5 | 200 | 3.0 |

Table 1 shows example structures 1 and 2 of the display device 1A. Table 1 shows the focal length f, the thickness a/2, and the virtual image distance b in "mm". In example structures 1 and 2, the virtual image distance b is 200 mm, and the virtual image magnification factor m is 2 or 3. As shown in Table 1, when the optical system 10 includes the plane mirror 13, the optical system 10 has the thickness a/2 of 50 mm for the virtual image distance b being 200 mm and the virtual image magnification factor m being 2 (refer to example structure 1), and has the thickness a/2 of 33.5 mm for the virtual image distance b being 200 mm and the virtual image magnification factor m being 3 (refer to example structure 2).

FIG. 7 is a diagram describing projection of the virtual image V in the display device 1A'. FIG. 7 does not illustrate the illuminator 4 and the optical members (the first retarder 12, the second retarder 14, and the polarizer 15) that do not contribute to the projection distance of the virtual image V (virtual image distance) or do not contribute to the magnification factor of the virtual image V. In the figure, the concave mirror 11 is in contact with the display panel 2 to define the distance between the concave mirror 11 and the display panel 2 to be substantially "zero". In the example described below, the focal length of the convex mirror 13' is denoted by f'. The focal length of the concave mirror 11 is denoted by f". The distance between the concave mirror 11 and the convex mirror 13' is denoted by a'/2. The distance a'/2 corresponds to the thickness of the optical system 10 in the display device 1A'.

The display device 1A' is configured to magnify, using the concave mirror 11, the virtual image Q' of the display surface 2a produced with the convex mirror 13', and to project the magnified image as the virtual image V. As illustrated in FIG. 7, the virtual image Q' is located opposite to the concave mirror 11 from the convex mirror 13'. A distance b' between the virtual image Q' and the convex mirror 13' is expressed by Formula 3 below. A magnification factor m' by which the display surface 2a is magnified to form the virtual image Q' is expressed by Formula 4 below. As expressed by Formula 3, b' < a'/2, and the magnification factor m' for the virtual image Q' is less than 1. The virtual image Q' is thus an image of the display surface 2a being reduced.

$$b' = 1/\{1/f' + 1/(a'/2)\} \qquad (3)$$

$$m' = b'/(a'/2) \qquad (4)$$

A virtual image distance b" of the virtual image V and a virtual image magnification factor m" of the virtual image V are respectively expressed by Formulas 5 and 6 below. Note that the virtual image distance b" is the distance between the virtual image V and the concave mirror 11. The virtual image magnification factor m" is the magnification factor by which the display surface 2a is magnified to form the virtual image V.

$$b'' = 1/\{1/(a'/2 + b') - 1/f''\} \qquad (5)$$

$$m'' = (b'/(a'/2)) \times b''/(a'/2 + b') \qquad (6)$$

Table 2 shows example structures 3 and 4 of the display device 1A'. Table 2 shows the focal lengths f' and f'', the thickness a'/2, and the virtual image distance b'' in "mm". In example structures 3 and 4, the virtual image distance b'' is 200 mm, and the virtual image magnification factor m'' is 2 or 3, as in example structures 1 and 2. As shown in Table 2, when the optical system 10 includes the convex mirror 13', the optical system 10 has the thickness a'/2 of 32 mm for the virtual image distance b'' being 200 mm and the virtual image magnification factor m'' being 2 as in example structure 1 (refer to example structure 3), and has the thickness a'/2 of 25.5 mm for the virtual image distance b'' being 200 mm and the virtual image magnification factor m'' being 3 as in example structure 2 (refer to example structure 4). The optical system 10 can thus be thinner, allowing the display device 1A' to be thinner.

Table 2

| Example structure | Focal length f' | Focal length f'' | Thickness a'/2 | Virtual image distance b'' | Virtual image magnification factor m'' |
|---|---|---|---|---|---|
| 3 | 28.4 | 61.5 | 32 | 200 | 2.0 |
| 4 | 39.3 | 51.5 | 25.5 | 200 | 3.0 |

When the value of each of the virtual image distance b'', the virtual image magnification factor m'', and the thickness a'/2 is given, the optical system 10 in the display device 1A' can be designed to achieve the given values.

The design of the optical system 10 in the display device 1A' will now be described with reference to FIG. 8. FIG. 8 does not illustrate the illuminator 4, the first retarder 12, the second retarder 14, and the polarizer 15, as in FIG. 7. In the figure, the concave mirror 11 is in contact with the display panel 2 to define the distance between the concave mirror 11 and the display panel 2 to be substantially "zero". In the example described below, the thickness of the optical system 10 is denoted by a1, the distance between the convex mirror 13' and the virtual image Q' is denoted by b1, and the distance between the concave mirror 11 and the virtual image V is denoted by b2. The magnification factor by which the display surface 2a is magnified to form the virtual image Q' is denoted by m1. The magnification factor by which the virtual image Q' is magnified to form the virtual image V is denoted by m2. Further, the focal length of the convex mirror 13' is denoted by f1. The focal length of the concave mirror 11 is denoted by f2.

As expressed by Formula 7 below, a magnification factor M by which the display surface 2a is magnified to form the virtual image V is the product of the magnification factor m1 and the magnification factor m2. The distance a2 between the concave mirror 11 and the virtual image Q' is the sum of the thickness a1 and the distance b1, as expressed by Formula 8 below.

$$M = m1 \times m2 \qquad (7)$$

$$a2 = a1 + b1 \qquad (8)$$

The magnification factor M is expressed by Formula 9 below, where the thickness a1 of the optical system 10 is defined as T, and the virtual image distance (specifically, the distance b1 between the concave mirror 11 and the virtual image V) is defined as D.

$$\begin{aligned} M &= m1 \times m2 \\ &= (b1/a1) \times (b2/a2) \\ &= (b1/T) \times (D/a2) \qquad (9) \end{aligned}$$

Formula 10 below that holds for the distance b1 between the convex mirror 13' and the virtual image Q' can be substituted into Formula 9 to obtain Formula 11 below.

$$1/a1 = 1/b1 + 1/f1 \tag{10}$$

$$M = f1 \times (1 + D/f2)/(T + f1) \tag{11}$$

Formula 12 below that holds for the distance b2 between the concave mirror 11 and the virtual image V can be substituted into Formula 8 to obtain Formula 13 below.

$$1/a2 = 1/b2 + 1/f2 \tag{12}$$

$$D \times f2/(D + f2) = T + T \times f1/(T + f1) \tag{13}$$

Using formulas 9 and 13, the focal length f1 of the convex mirror 13' and the focal length f2 of the concave mirror 11 are obtained as expressed by formulas 14 and 15 below. Note that A in Formula 15 is expressed by Formula 16 below.

$$f1 = M \times T \times T/(D - 2 \times M \times T) \tag{14}$$

$$f2 = D \times A/(M - A) \tag{15}$$

$$A = f1/(T + f1) \tag{16}$$

As expressed by the above calculations, when the value of each of the magnification factor M, the thickness T, and the virtual image distance D is given for the display device 1A', the focal lengths f1 and f2 can be determined (in other words, the optical system 10 can be designed) to achieve the given values.

In the display device 1A or 1A', the optical path length of light emitted from the display panel 2, transmitted through the first semitransmissive mirror 11, reflected by the second semitransmissive mirror 13 or 13', and reaching the first semitransmissive mirror 11 may be shorter than the focal length of the first semitransmissive mirror 11. This structure allows the user 22 to view the virtual image V. In the display device 1A or 1A', the optical path length of light emitted from the display panel 2, transmitted through the first semitransmissive mirror 11, reflected by the second semitransmissive mirror 13 or 13', and reaching the first semitransmissive mirror 11 may be longer than the focal length of the first semitransmissive mirror 11. This structure allows the user 22 to view the real image.

A display device according to still another embodiment of the present disclosure will now be described. The display device according to the present embodiment differs from the display device according to the above embodiment in the structure of the optical system. The other components that are the same as or similar to the components of the display device according to the above embodiment are denoted by the same reference numerals and will not be described in detail.

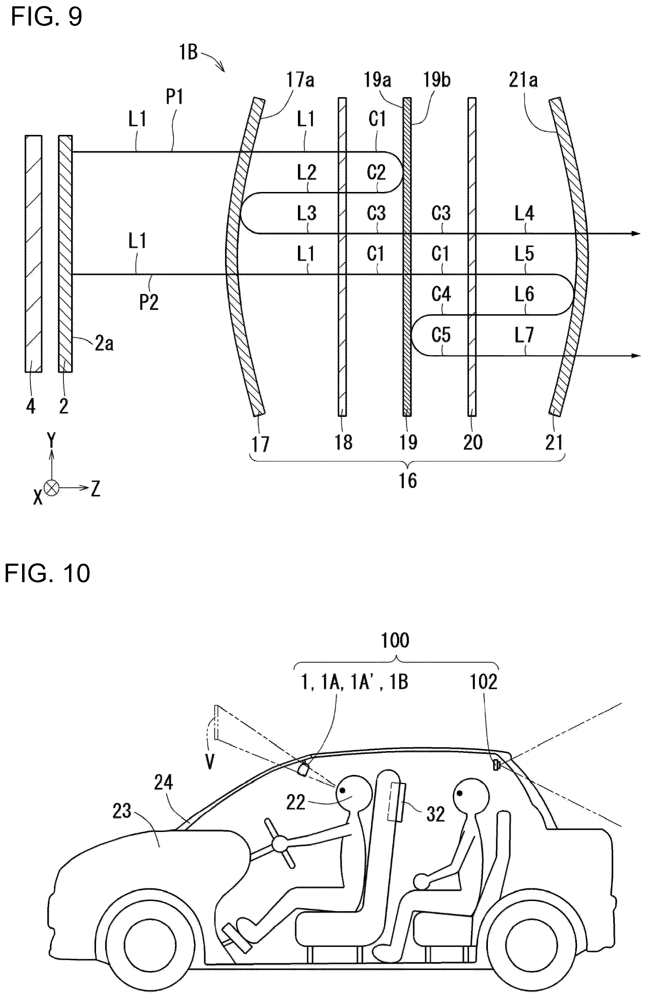

In the present embodiment, as illustrated in FIG. 9, a display device 1B includes the display panel 2 and an optical system 16.

The optical system 16 includes a first semitransmissive mirror 17, a first retarder 18, a second semitransmissive mirror 19, a second retarder 20, and a third semitransmissive mirror 21. The first semitransmissive mirror 17, the first retarder 18, the second semitransmissive mirror 19, the second retarder 20, and the third semitransmissive mirror 21 are arranged in this order in the emission direction of the display light from the display panel 2.

The first retarder 18 faces a reflective surface 17a of the first semitransmissive mirror 17. The first retarder 18 is spaced from the display surface 2a in the emission direction of the display light from the display panel 2. The second retarder 20 is spaced from the first retarder 12 in the emission direction of the display light. The first retarder 18 and the second retarder 20 are quarter-wave plates.

The first semitransmissive mirror 17 is located between the display panel 2 and the first retarder 18. The first semitransmissive mirror 17 may transmit a part of incident light and reflect the remaining part. In the present embodiment, the first semitransmissive mirror 17 may be configured to transmit s-polarized light and reflect p-polarized light. As illustrated in FIG. 9, the first semitransmissive mirror 17 may be a concave mirror including a concave reflective surface 17a facing the first retarder 18. The reflective surface 17a of the first semitransmissive mirror 17 may at least partly have a spherical shape, an aspherical shape, or a freeform shape.

The first semitransmissive mirror 17 includes, for example, a substrate and multiple thin metal wires (a metal nanowire grid) on a surface of the substrate. The substrate may have a transmittance of 100% or substantially 100% to light in the visible light region. The substrate may be made of, for example, a resin material or a glass material. The resin material may be, for example, an acrylic resin or a polycarbonate resin. The thin metal wires may be made of a metal material such as aluminum, chromium, or titanium oxide. The thin metal wires may be arranged in one direction. The first semitransmissive mirror 17 can transmit an optical component vibrating in a direction perpendicular to the grid, and reflect an optical component vibrating in a direction parallel to the grid. The metal nanowire grid may be on the surface of the substrate facing the first retarder 18. Note that, although the first semitransmissive mirror 11 includes the metal nanowire grid to function as a reflective polarizer in this example, the first semitransmissive mirror 11 may simply be a semitransparent mirror, with a reflective polarizer being separate from the first semitransmissive mirror 11.

The second semitransmissive mirror 19 is located between the first retarder 18 and the second retarder 20. The second semitransmissive mirror 13 may transmit a part (e.g., substantially 50%) of incident light and reflect the remaining part (e.g., substantially 50%). As illustrated in FIG. 9, the second semitransmissive mirror 19 may be a plane mirror including a reflective surface 19a facing the first retarder 18 and a reflective surface 19b facing the second retarder 20. The second semitransmissive mirror 19 is also referred to as a plane semitransparent mirror. As illustrated in FIG. 32, the second semitransmissive mirror 19 may be integral with at least one of the first retarder 18 or the second retarder 20.

The second semitransmissive mirror 19 may include, for example, a substrate and a semitransmissive layer on a surface of the substrate. The substrate may have a transmittance of 100% or substantially 100% to light in the visible light region. The substrate may be made of, for example, inorganic glass or a resin material. The resin material may be, for example, an acrylic resin or a polycarbonate resin. The semitransmissive layer may be a metal thin film. The metal thin film may be made of a metal material such as aluminum or chromium. The semitransmissive layer is not limited to a metal thin film, and may be, for example, a dielectric multilayer film. The first retarder 18 and the second retarder 20 may be fixed to the second semitransmissive mirror 19 with an optically transparent adhesive, such as an OCA. The adhesive may be a material with small retardation.

The third semitransmissive mirror 21 faces the surface of the second retarder 20 opposite to the surface facing the second semitransmissive mirror 19. The third semitransmissive mirror 21 is located downstream from the second retarder 20 in the emission direction of the display light from the display panel 2. The third semitransmissive mirror 21 may transmit a part of incident light and reflect the remaining part. In the present embodiment, the third semitransmissive mirror 21 may be configured to reflect s-polarized light and transmit p-polarized light. As illustrated in FIG. 9, the third semitransmissive mirror 21 may be a concave mirror including a concave reflective surface 21a facing the second retarder 20. The reflective surface 21a of the third semitransmissive mirror 21 may at least partly have a spherical shape, an aspherical shape, or a freeform shape.

The third semitransmissive mirror 21 includes, for example, a substrate and multiple thin metal wires (a metal nanowire grid) on a surface of the substrate. The substrate may have a transmittance of 100% or substantially 100% to light in the visible light region. The substrate may be made of, for example, a resin material or a glass material. The resin material may be, for example, an acrylic resin or a polycarbonate resin. The thin metal wires may be made of a metal material such as aluminum, chromium, or titanium oxide. The thin metal wires may be arranged in one direction. The third semitransmissive mirror 21 can transmit an optical component vibrating in a direction perpendicular to the grid, and reflect an optical component vibrating in a direction parallel to the grid. The metal nanowire grid may be on the surface of the substrate facing the second retarder 20. Note that, although the third semitransmissive mirror 21 includes the metal nanowire grid to function as a reflective polarizer in this example, the third semitransmissive mirror 21 may simply be a semitransparent mirror, with a reflective polarizer being separate from the third semitransmissive mirror 21.

The optical function of the optical system 16 will now be described. In the display device 1B, the display light emitted from the display panel 2 may travel along a path P1 or a path P2 to be emitted outside. The light traveling along the path P1 will be described first. The s-polarized light (first linearly polarized light L1) as the display light emitted from the display panel 2 is transmitted through the first semitransmissive mirror 17. The first linearly polarized light L1 is transmitted through the first retarder 18 to be converted to first circularly polarized light C1. The first circularly polarized light C1 is incident on the second semitransmissive mirror 19. A part (e.g., substantially 50%) of the first circularly polarized light C1 is reflected by the second semitransmissive mirror 19 to be converted to second circularly polarized light C2. The second circularly polarized light C2 is transmitted through the first retarder 18 to be converted to second linearly polarized light L2 (in other words, p-polarized light) having a polarization direction perpendicular to the polarization direction of the first linearly polarized light L1. The second linearly polarized light L2 is reflected by the first semitransmissive mirror 17 to be converted to third linearly polarized light L3 (in other words, p-polarized light) having a polarization direction perpendicular to the polarization direction of the first linearly polarized light L1. The third linearly polarized light L3 is transmitted through the first retarder 18 to be converted to third circularly polarized light C3. The third circularly polarized light C3 is incident on the second semitransmissive mirror 19. A part (e.g., substantially 50%) of the third circularly polarized light C3 is transmitted through the second semitransmissive mirror 19. The third circularly polarized light C3 transmitted through the second semitransmissive mirror 19 is then transmitted through the second retarder 20 to be converted to fourth linearly polarized light L4 (in other words, p-polarized light) having a polarization direction perpendicular to the polarization direction of the first linearly polarized light L1. The fourth linearly polarized light L4 is transmitted through the third semitransmissive mirror 21 and emitted outside.

The light traveling along the path P2 will now be described. The remaining part (e.g., substantially 50%) of the first circularly polarized light C1 incident on the second semitransmissive mirror 19 is transmitted through the second semitransmissive mirror 19. The first circularly polarized light C1 transmitted through the second semitransmissive mirror 19 is then transmitted through the second retarder 20 to be converted to fifth linearly polarized light L5 (in other words, s-polarized light) having a polarization direction parallel to the polarization direction of the first linearly polarized light L1. The fifth linearly polarized light L5 is reflected by the third semitransmissive mirror 21 to be converted to sixth linearly polarized light L6 (in other words, s-polarized light) having a polarization direction parallel to the polarization direction of the first linearly polarized light L1. The sixth linearly polarized light L6 is transmitted through the second retarder 20 to be converted to fourth circularly polarized light C4. The fourth circularly polarized light C4 is incident on the second semitransmissive mirror 19. Apart (e.g., substantially 50%) of the fourth circularly polarized light C4 is reflected by the second semitransmissive mirror 19 to be converted to fifth circularly polarized light C5. The fifth circularly polarized light C5 is transmitted through the second retarder 20 to be converted to seventh linearly polarized light L7 (in other words, p-polarized light) having a polarization direction perpendicular to the polarization direction of the first linearly polarized light L1. The seventh linearly polarized light L7 is transmitted through the third semitransmissive mirror 21 and emitted outside.

As described above, in the display device 1B, the display light emitted from the display panel 2 travels along the path P1 or the path P2 to be emitted outside. The amount (luminance) of light emitted from the display device 1B is, for example, substantially 50% of the amount (luminance) of the display light emitted from the display panel 2. The display device 1B can thus have higher light use efficiency and higher luminance of light emitted outside.

Note that, although the first retarder 18 and the second retarder 20 are quarter-wave plates in the above example, the first retarder 18 and the second retarder 20 may be, for example, waveplates other than quarter-wave plates or a combination of a quarter-wave plate and another waveplate that allows a part of light to be reflected by the first semitransmissive mirror 17 and another part of the light to be transmitted through the first semitransmissive mirror 17. The first retarder 18 and the second retarder 20 may be, for example, waveplates other than quarter-wave plates or a combination of a quarter-wave plate and another waveplate that allows a part of light to be reflected by the third semitransmissive mirror 21 and another part of the light to be transmitted through the third semitransmissive mirror 21.

The first semitransmissive mirror 17, the first retarder 18, the second semitransmissive mirror 19, the second retarder 20, and the third semitransmissive mirror 21 are held by a holder (not illustrated) to maintain their relative positions. The first semitransmissive mirror 17 and the first retarder 18 are spaced from each other with air between the first semitransmissive mirror 17 and the first retarder 18. The third semitransmissive mirror 21 and the second retarder 20 are spaced from each other with air between the third semitransmissive mirror 21 and the second retarder 20. The display device 1B includes no member made of a resin material, such as a polymer, between the first semitransmissive mirror 17 and the first retarder 18 or between the third semitransmissive mirror 21 and the second retarder 20. This can eliminate the likelihood of, for example, deformation of the first semitransmissive mirror 11 or misalignment between the first semitransmissive mirror 11 and the first retarder 12. This can reduce deterioration in display quality.

The optical system 16 is a single-axis (on-axis) optical system in which the optical axis of incident light is substantially aligned with the optical axis of emitted light. The optical system 16 thus uses a smaller space, allowing the display device 1B to be smaller. The single-axis optical system 16 can reduce, for example, distortion or uneven luminance of the virtual image V viewed by the user 22. This also facilitates the design of the optical system 16.

In the display device 1B, the focal length of the first semitransmissive mirror 17 may be equal to the focal length of the third semitransmissive mirror 21, and the second semitransmissive mirror 19 may be a plane mirror. In an imaging device including the display device 1B with this structure, the virtual image formed by light traveling along the path P1 substantially coincides with the virtual image formed by light traveling along the path P2. This can improve display quality.

In the display device 1B, the optical path length of light emitted from the display panel 2, transmitted through the first semitransmissive mirror 17, reflected by the second semitransmissive mirror 19, and reaching the first semitransmissive mirror 17 may be shorter than the focal length of the first semitransmissive mirror 17, and the optical path length of light emitted from the display panel 2, transmitted through the first semitransmissive mirror 17, reflected by the second semitransmissive mirror 19, and reaching the third semitransmissive mirror 21 may be shorter than the focal length of the first semitransmissive mirror 17. This structure allows the user 22 to view the virtual image V. In the display device 1B, the optical path length of light emitted from the display panel 2, transmitted through the first semitransmissive mirror 17, reflected by the second semitransmissive mirror 19, and reaching the first semitransmissive mirror 17 may be longer than the focal length of the first semitransmissive mirror 17, and the optical path length of light emitted from the display panel 2, transmitted through the first semitransmissive mirror 17, reflected by the second semitransmissive mirror 19, and reaching the third semitransmissive mirror 21 may be longer than the focal length of the first semitransmissive mirror 17. This structure allows the user 22 to view the real image.

An imaging device according to one embodiment of the present disclosure will now be described. In the present embodiment, an imaging device 100 includes the display device 1, 1A, 1A', or 1B. The imaging device 100 allows the user 22 to view the display light emitted from the display panel 2 as the virtual image V. The imaging device 100, which includes the display device 1, 1A, 1A', or 1B, can be small and also allow the user 22 to view the virtual image V with improved display quality. When the imaging device 100 includes the display device 1A', the imaging device 100 can be particularly thin. The imaging device 100 may allow the user 22 to view the display light emitted from the display panel 2 as the real image.

As illustrated in FIG. 10, the imaging device 100 may be mounted on a movable body 23. The movable body 23 may be a vehicle. Although FIG. 10 illustrates a passenger car as the vehicle, the vehicle may be any of other motor vehicles, such as a truck, a bus, or a trolley bus. The display device 1, 1A, 1A', or 1B may be at any position in the movable body 23. The display device 1, 1A, 1A', or 1B may be located on a dashboard (instrument panel), in the dashboard, on a vehicle ceiling, or on an A-pillar. The imaging device 100 may include components that also serve as other devices or components included in the movable body 23.

As illustrated in FIG. 10, the imaging device 100 may include a camera 102 that captures an image of a scenery behind the movable body 23. The camera 102 may include, for example, a charge-coupled device (CCD) image sensor or a complementary metal-oxide semiconductor (CMOS) image sensor. The imaging device 100 and the camera 102 are connected to each other through at least one of wired communication or wireless communication. When the movable body 23 is a vehicle, the imaging device 100 and the camera 102 may be connected to each other with a vehicle network such as a controller area network (CAN).

The imaging device 100 may be configured to display at least a part of the image captured by the camera 102 on the display panel 2. With this structure, the imaging device 100 allows the user 22 (the driver of the movable body 23) to view the scenery behind the movable body 23 as the virtual image V formed at a position farther than the imaging device 100 from the user 22. This allows the user 22 to view the scenery behind the movable body 23 without greatly changing a gaze distance (gaze point) during driving of the movable body 23. This can improve viewability of the virtual image V and improve driving safety. The imaging device 100, which is small, can avoid using a large space inside the driver's cabin in the movable body 23 and avoid interfering with driving. The imaging device 100 mounted on the movable body 23 and configured to allow the user 22 to view the scenery behind the movable body 23 as the virtual image V is also referred to as a digital rearview mirror.

In the imaging device 100, the display device 1, 1A, 1A', or 1B may include the optical element 9 (refer to FIG. 3). In the imaging device 100, the display panel 2 may be configured to display a composite image including a left-eye image and a right-eye image having parallax between these images and emit display light of the left-eye image and display light of the right-eye image. The optical element 9 may be configured to direct the display light of the left-eye image to the left eye of the user 22, and direct the display light of the right-eye image to the right eye of the user 22. This structure allows the user 22 to view, as the stereoscopic virtual image V, the display light of the left-eye image and the display light of the right-eye image emitted from the display panel 2.

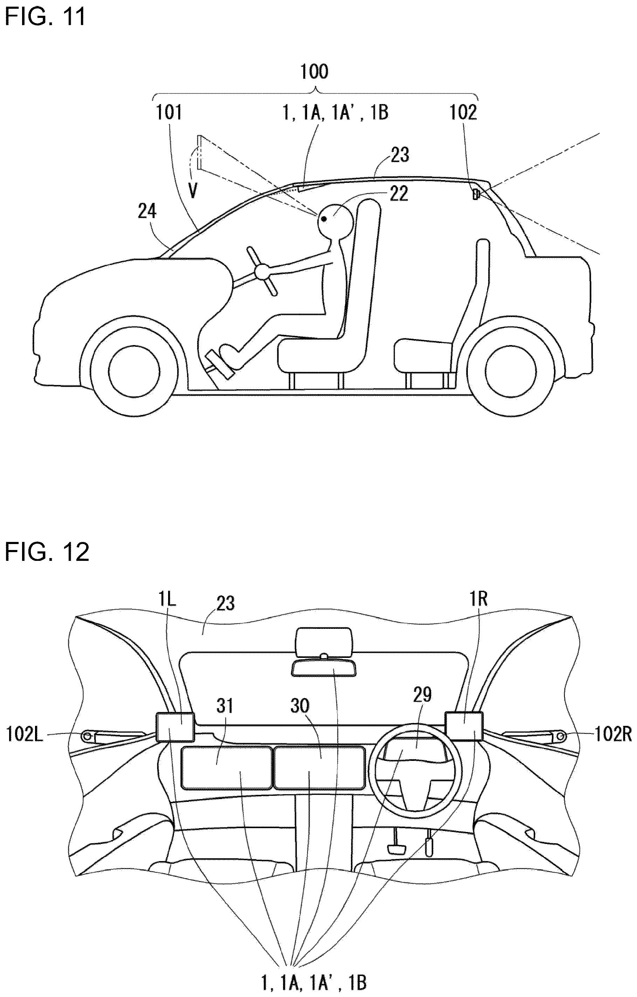

As illustrated in FIG. 11, the imaging device 100 may include a reflective optical element 101. In the imaging device 100, the display device 1, 1A, 1A', or 1B may be configured to emit display light toward the reflective optical element 101, which may then direct a part of the display light to the eyes of the user 22. When the imaging device 100 is mounted on the movable body 23 including a windshield 24, the imaging device 100 may use the windshield 24 also as the reflective optical element 101.

The imaging device 100 may be used in a digital sideview mirror. With this structure, the imaging device 100 may include, as illustrated in FIG. 12, the display device 1, 1A, 1A', or 1B (hereafter also referred to as a left display device 1L) located on a left A-pillar of the movable body 23, the camera 102 (hereafter also referred to as a left camera 102L) that captures an image of the left rear of the movable body 23, the display device 1, 1A, 1A', or 1B (hereafter also referred to as a right display device 1R) located on a right A-pillar of the movable body 23, and the camera 102 (hereafter also referred to as a right camera 102R) that captures an image of the right rear of the movable body 23. The left display device 1L may allow the user 22 to view the image of the left rear of the movable body 23 captured by the left camera 102L as the virtual image V (hereafter also referred to as a virtual image V2). The right display device 1R may allow the user 22 to view the image of the right rear of the movable body 23 captured by the right camera 102R as the virtual image V (hereafter also referred to as a virtual image V3). Note that the image may be a moving image (also referred to as a video) or a still image. The left camera 102L may be at or near the position of a left door mirror. The right camera 102R may be at or near the position of a right door mirror.

The imaging device 100 may be configured to cause the distance between the eyes (or an eye box) of the user 22 and the virtual image V2 and the distance between the eyes (or the eye box) and the virtual image V3 to be substantially equal to each other. This structure allows the user 22 to check the left rear and right rear of the movable body 23 without greatly changing the gaze distance (the distance between the eyes of the user 22 and the gaze point at which the user 22 gazes). This can improve driving safety. Note that the eye box refers to an area defined in a real space in which the eyes of the user 22 are expected to be located.

The imaging device 100 may be configured to cause the distance between the eyes (or the eye box) of the user 22 and the virtual image V1, the distance between the eyes (or the eye box) and the virtual image V2, and the distance between the eyes (or the eye box) and the virtual image V3 to be substantially equal to one another. This structure allows the user 22 to check the immediate rear, the left rear, and the right rear of the movable body 23 without greatly changing the gaze distance. This can improve driving safety.

The imaging device 100 may be used in a cluster 29 in the dashboard in the movable body 23 (refer to FIG. 12). With this structure, the display device 1, 1A, 1A', or 1B may allow the user 22 to view an image representing information about driving, such as the speed of the vehicle, the rotational speed of the engine, or the amount of remaining fuel, as the virtual image V (hereafter also referred to as a virtual image V4).

The imaging device 100 may be used in a center information display (CID) 30 (refer to FIG. 12). With this structure, the display device 1, 1A, 1A', or 1B may be located in a center cluster of the movable body 23 to allow the user 22 to view an image representing information about, for example, navigation or the environment inside the vehicle (e.g., settings of an air conditioner or an audio device) as the virtual image V (hereafter also referred to as a virtual image V5).

The imaging device 100 may be configured to cause the distance between the eyes (or the eye box) of the user 22 and the virtual image V4 and the distance between the eyes (or the eye box) and the virtual image V5 to be substantially equal to each other. This structure allows the user 22 to check information about, for example, driving of the movable body 23, navigation, or the environment inside the vehicle without greatly changing the gaze distance. This can improve driving safety.

The imaging device 100 may be configured to cause the distance between the eyes (or the eye box) of the user 22 and the virtual image V1, the distance between the eyes (or the eye box) and the virtual image V2, the distance between the eyes (or the eye box) and the virtual image V3, the distance between the eyes (or the eye box) and the virtual image V4, and the distance between the eyes (or the eye box) and the virtual image V5 to be substantially equal to one another. This structure allows the user 22 to check, without greatly changing the gaze distance, the immediate rear, the left rear, and the right rear of the movable body 23 and also check information about, for example, driving of the movable body 23, navigation, or the environment inside the vehicle. This can improve driving safety.

The imaging device 100 may be used in a passenger information display (PID) 31 (refer to FIG. 12). With this structure, the display device 1, 1A, 1A', or 1B may be located in the dashboard near the passenger seat to cause a passenger to view, as the virtual image V, a video of entertainment content or a video representing information about, for example, the audio device or the air conditioner.

The imaging device 100 may be used in a rear-seat entertainment (RSE) system 32 (refer to FIG. 10). With this structure, the display device 1, 1A, 1A', or 1B may be located on the back of the front seat to cause a passenger seated in the rear seat of the movable body 23 to view, as the virtual image V, a video of entertainment content or a video representing information about, for example, the audio device or the air conditioner.

The display device 1, 1A, 1A', or 1B may include a drive that adjusts the relative positions of the display panel 2, the semitransmissive mirror 6 or the first semitransmissive mirror 11 or 17, and the second semitransmissive mirror 13, 13', or 21 in the depth direction. The image data of the image displayed on the display panel 2 may include depth information indicating the depth (the distance in the depth direction) from a reference position. The reference position may be, for example, the position of the display panel 2. A virtual image display device 100 may be configured to adjust the distances between the display panel 2, the semitransmissive mirror 6 or the first semitransmissive mirror 11 or 17, and the second semitransmissive mirror 13, 13', or 21 based on the depth information included in the image data, and change the position at which the virtual image V is formed in the depth direction. The drive may be, for example, an electric slider or an electric cylinder. The drive may be configured to allow the user 22 to manually adjust the relative positions of the display panel 2, the semitransmissive mirror 6 or the first semitransmissive mirror 11 or 17, and the second semitransmissive mirror 13, 13', or 21.

Another example of the display device according to one or more embodiments of the present disclosure will now be described.

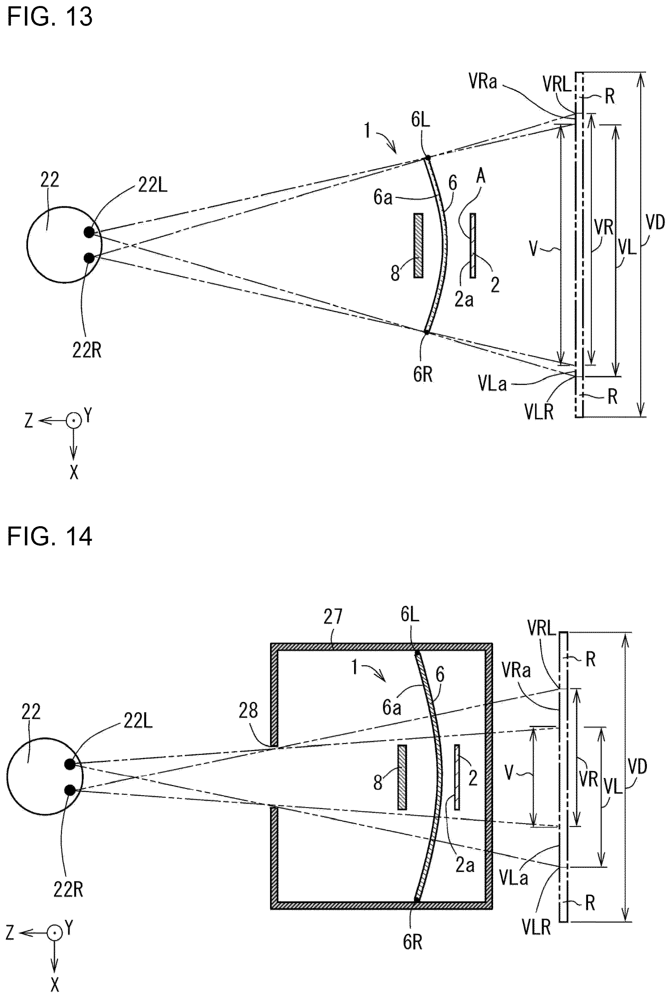

Another example of the display device 1, 1A, 1A', or 1B will be described first. FIGs. 13 and 14 are each a top view of another example display device according to one or more embodiments of the present disclosure. Note that FIGs. 13 and 14 do not illustrate the first retarder 5, the second retarder 7, and the optical element 9. Although the display device 1 is described as an example below, the display devices 1A, 1A', and 1B each also have the same or a similar structure.

The display device 1 may be a part of the imaging device 100 (a digital rearview mirror). An ordinary rearview mirror, or specifically, a rearview mirror made of glass, produces an image viewed with the user's left eye (also referred to as a left-eye mirror image) and an image viewed with the user's right eye (also referred to as a right-eye mirror image) that is different from the left-eye mirror image. The user perceives, with the cognitive brain function, the left-eye mirror image and the right-eye mirror image as a mirror image viewable with the two eyes.

The display device 1 may be configured to project, in the field of view of the user 22, a virtual image including a binocular viewable area (the virtual image V in FIGs. 13 and 14) viewable with a left eye 22L and a right eye 22R of the user 22, a left-eye viewable area VLa viewable with the left eye 22L without the right eye 22R, and a right-eye viewable area VRa viewable with the right eye 22R without the left eye 22L. In other words, when the virtual image viewable with the left eye 22L is referred to as a left-eye virtual image VL and the virtual image viewable with the right eye 22R is referred to as a right-eye virtual image VR, the left-eye virtual image VL may include the left-eye viewable area VLa viewable with the left eye 22L without the right eye 22R, and the right-eye virtual image VR may include the right-eye viewable area VRa viewable with the right eye 22R without the left eye 22L. In the field of view of the user 22, the left-eye viewable area VLa is on the right of the binocular viewable area, and the right-eye viewable area VRa is on the left of the binocular viewable area. As illustrated in FIG. 13, the display device 1 may be configured to cause a right end 6R of the semitransmissive mirror 6 viewable by the user 22 to be located on the line connecting the left eye 22L and a right end VLR of the left-eye virtual image VL, and to cause a left end 6L of the semitransmissive mirror 6 viewable by the user 22 to be located on the line connecting the right eye 22R and a left end VRL of the right-eye virtual image VR.

With this structure, the range observed by the user 22 through the left-eye virtual image VL and the range observed by the user 22 through the right-eye virtual image VR are different from each other, in the same manner as or in a similar manner to when the left-eye mirror image and the right-eye mirror image are formed with an ordinary rearview mirror. The user 22 can thus perceive, with the cognitive brain function, the left-eye virtual image VL and the right-eye virtual image VR as the virtual image V viewable with the two eyes 22L and 22R, in the same manner as or in a similar manner to when the user 22 uses an ordinary rearview mirror. This can reduce discomfort for the user 22.

In the display device 1, the reflective surface of the reflective polarizer 8 adjacent to the display surface 2a may have a size larger than or equal to the size of the display surface 2a. With this structure, the reflective polarizer 8 can reflect the entire image of the display surface 2a toward the semitransmissive mirror 6. The display device 1 may be configured to cause a virtual image VD (hereafter also referred to as a display surface virtual image) of the entire display surface 2a projected in the field of view of the user 22 to include the left-eye virtual image VL and the right-eye virtual image VR. This structure can form an area R appearing in the field of view of the left eye 22L or the right eye 22R when the user 22 moves the head, or in other words, an additional view area R viewable with the left eye 22L or the right eye 22R. This allows the user 22 to view the left-eye virtual image VL and the right-eye virtual image VR that change with head movement in the same manner as or in a similar manner to when the user 22 uses an ordinary rearview mirror. This can reduce discomfort for the user 22. The size (dimension) of the additional view area R may be controlled by controlling, for example, the size of the display surface 2a or the magnification factor of the virtual image.

The size of the additional view area R may also be controlled by controlling an image display area (an area in which an image is actually displayed) A on the display surface 2a. The image display area A that is set larger causes the additional view area R to be larger. The image display area A that is set smaller causes the additional view area R to be smaller. When the image display area A is smaller than a predetermined threshold area, the additional view area R disappears, causing the left-eye virtual image VL and the right-eye virtual image VR to be the same virtual image.

As described above, the display device 1 may include a housing 27. The housing 27 may include an opening 28 in its front side (nearer the user 22). The virtual image V may be larger than the opening 28 in the field of view of the user 22. The size of the additional view area R may also be controlled based on the size of the opening 28. The size of the opening 28 may be designed as appropriate to form the left-eye virtual image VL including an area unviewable with the right eye 22R and the right-eye virtual image VR including an area unviewable with the left eye 22L, as illustrated in FIG. 14. The size of the opening 28 may be designed as appropriate to form the additional view area R and control the size of the additional view area R. When the size of the additional view area R is controlled based on the opening 28, the semitransmissive mirror 6 may have any size that allows the entire image of the display surface 2a to be projected in the field of view of the user 22. This facilitates the design of the optical system 3.

The display devices 1A, 1A', and 1B each also have the same or a similar structure. The display device 1A, 1A', or 1B may be configured to project, in the field of view of the user 22, a virtual image including the binocular viewable area viewable with the left eye 22L and the right eye 22R, the left-eye viewable area viewable with the left eye 22L without the right eye 22R, and the right-eye viewable area viewable with the right eye 22R without the left eye 22L. This structure can reduce discomfort for the user 22. The display device 1A or 1A' may be configured to cause the right end of the first semitransmissive mirror 11 viewable by the user 22 to be located on the line connecting the left eye 22L and the right end of the left-eye virtual image, and to cause the left end of the first semitransmissive mirror 11 viewable by the user 22 to be located on the line connecting the right eye 22R and the left end of the right-eye virtual image. The display device 1B may be configured to cause the right end of each of the first semitransmissive mirror 17 and the third semitransmissive mirror 21 viewable by the user 22 to be located on the line connecting the left eye 22L and the right end of the left-eye virtual image, and to cause the left end of each of the first semitransmissive mirror 17 and the third semitransmissive mirror 21 viewable by the user 22 to be located on the line connecting the right eye 22R and the left end of the right-eye virtual image. The display device 1A, 1A', or 1B may be configured to form the additional view area R. The display device 1A, 1A', or 1B may be configured to control the size of the additional view area R based on the image display area A or based on the opening 28 in the housing 27.

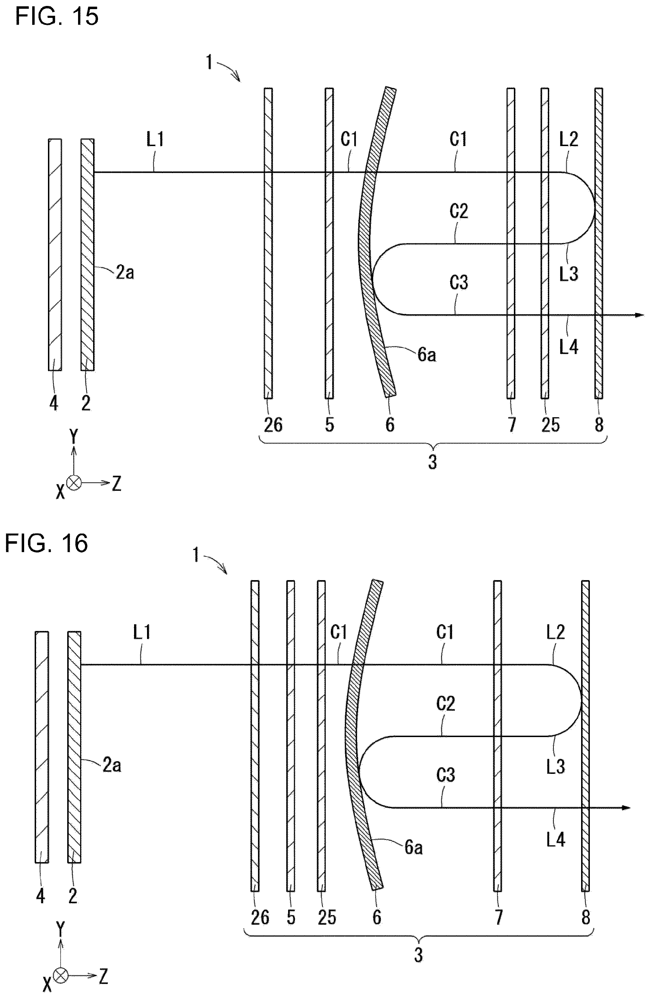

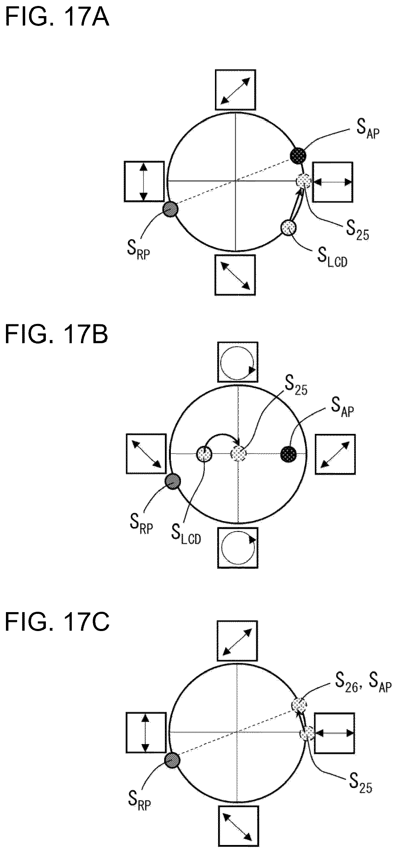

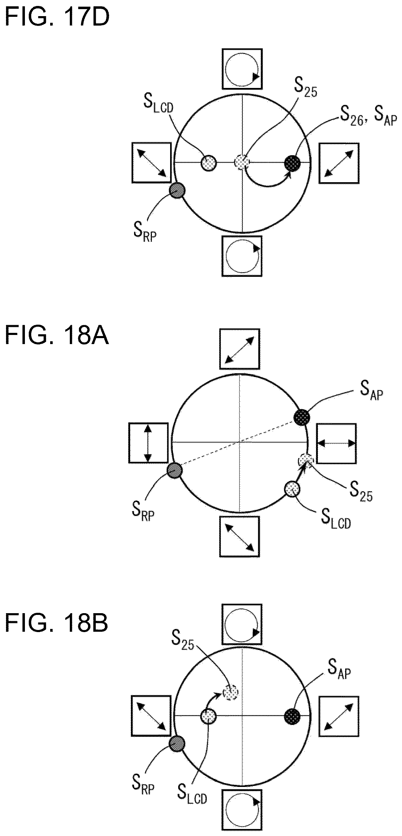

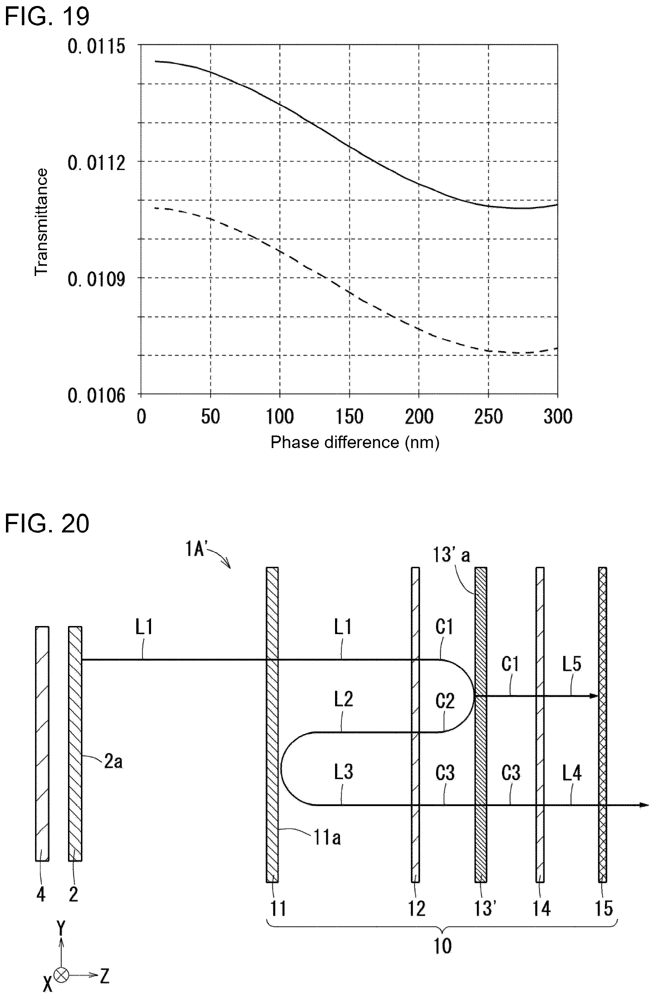

Another example of the display device 1, 1A, or 1A' will now be described. FIGs. 15 and 16 are each a cross-sectional view describing another example display device. FIGs. 17A to 17D and 18A to 18D are each a diagram describing an optical system in another example display device. FIG. 19 is a graph describing an optical system in another example display device. Although the display device 1 is described as an example below, the display devices 1A and 1A' each also have the same or a similar structure.

The display device 1 is configured to cause the second linearly polarized light L2 to be reflected by the reflective polarizer 8 without being emitted from the display device 1 when the user 22 is in front of the display device 1 (refer to FIGs.

2 and 3). In other words, the display device 1 is configured to have the transmission axis of a polarizer frontward (nearer the user 22) from the display panel 2 (liquid crystal panel) and the transmission axis of the reflective polarizer 8 being perpendicular to each other (in a crossed Nicols arrangement) when the display device 1 is viewed from the front. Thus, as illustrated in FIGs. 2 and 3, the second linearly polarized light L2 is not emitted from the display device 1, and the fourth linearly polarized light L4 is emitted from the display device 1. In other words, the user 22 views an image reflected by the semitransmissive mirror 6 as the virtual image V without directly viewing the display panel 2.

When the user 22 is not in front of the display device 1, the transmission axis of the polarizer frontward from the display panel 2 and the transmission axis of the reflective polarizer 8 may not form the crossed Nicols arrangement. This may cause a part of the second linearly polarized light L2 to be transmitted through the reflective polarizer 8. This may thus allow the user 22 to directly view the real image of the display panel 2 and also view the virtual image V reflected by the semitransmissive mirror 6, possibly lowering the display quality of the display device 1.

In this example, as illustrated in FIGs. 15 and 16, the display device 1 includes a third retarder 25 between the display panel 2 and the reflective polarizer 8. This allows the relative angle between the transmission axis of the polarizer frontward from the display panel 2 and the transmission axis of the reflective polarizer 8 to be close to the crossed Nicols arrangement when the user 22 is not in front of the display device 1. This can reduce deterioration in the display quality of the display device 1. The third retarder 25 may be, for example, a half-wave plate, a quarter-wave plate, an eighth-wave plate, a sixteenth-wave plate, or another waveplate that introduces any other phase difference. The third retarder 25 may have the optical axis substantially parallel to or substantially perpendicular to the transmission axis of the reflective polarizer 8.

In this example, as illustrated in FIGs. 15 and 16, the display device 1 may further include a fourth retarder 26 between the display panel 2 and the reflective polarizer 8. This structure allows the relative angle between the transmission axis of the polarizer frontward from the display panel 2 and the transmission axis of the reflective polarizer 8 to be closer to the crossed Nicols arrangement when the user 22 is not in front of the display device 1. This can further reduce deterioration in the display quality of the display device 1. The fourth retarder 26 may be, for example, a half-wave plate, a quarter-wave plate, an eighth-wave plate, a sixteenth-wave plate, or another waveplate that introduces any other phase difference. The fourth retarder 26 may have the optical axis substantially parallel to or substantially perpendicular to the transmission axis of the reflective polarizer 8.

The third retarder 25 and the fourth retarder 26 may be at any positions between the display panel 2 and the reflective polarizer 8. Without any other optical element between the third retarder 25 and the fourth retarder 26, the third retarder 25 and the fourth retarder 26 may be in contact with each other. This structure can reduce the thickness of the optical system 3 in the depth direction.

One of the third retarder 25 or the fourth retarder 26 may be a quarter-wave plate, and the other may be a half-wave plate. This structure can effectively reduce deterioration in the display quality of the display device 1. Both the third retarder 25 and the fourth retarder 26 may be half-wave plates. This structure can more effectively reduce deterioration in the display quality of the display device 1.

FIGs. 17A, 17B, 17C, and 17D each illustrate a Poincaré sphere describing the optical functions (the effects on the polarization states of light) of the third retarder 25 and the fourth retarder 26 when the third retarder 25 and the fourth retarder 26 are half-wave plates. FIGs. 17A and 17B are each a diagram describing the optical function of the third retarder 25. FIGs. 17C and 17D are each a diagram describing the optical function of the fourth retarder 26. FIGs. 17A and 17C each illustrate the Poincaré sphere viewed from the north pole (in an S3-direction). FIGs. 17B and 17D each illustrate the Poincaré sphere viewed laterally (in an S1-direction). In FIGs. 17A, 17B, 17C, and 17D, $S_{LCD}$ indicates the polarization state of light immediately after emitted from the display panel 2. $S_{25}$ indicates the polarization state of light that has passed through the third retarder 25. $S_{26}$ indicates the polarization state of light that has passed through the fourth retarder 26. In other words, $S_{26}$ indicates the polarization state of light immediately before incident on the reflective polarizer 8. $S_{RP}$ indicates the polarization state of light transmitted through the reflective polarizer 8 at a transmittance of substantially 100%. $S_{AP}$ indicates the antipode of $S_{RP}$ (the point symmetric to $S_{RP}$ with respect to the center of the Poincaré sphere). When $S_{26}$ is at or near $S_{AP}$, the light emitted from the display panel 2 and passing through the third retarder 25 and the fourth retarder 26 is less likely to be transmitted through the reflective polarizer 8. This can reduce the likelihood that the user 22 directly views the real image of the display panel 2, thus reducing deterioration in the display quality of the display device 1.

As illustrated in FIGs. 17C and 17D, when the third retarder 25 and the fourth retarder 26 are half-wave plates, $S_{26}$ is located substantially at $S_{AP}$. This can reduce the likelihood that the user 22 directly views the real image of the display panel 2, thus reducing deterioration in the display quality of the display device 1.

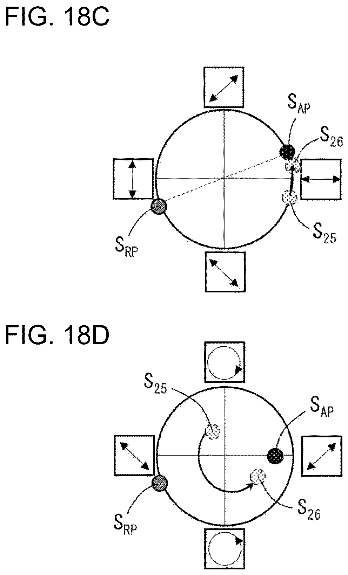

FIGs. 18A, 18B, 18C, and 18D each illustrate a Poincaré sphere describing the optical functions of the third retarder 25 and the fourth retarder 26 when the third retarder 25 is a quarter-wave plate and the fourth retarder 26 is a half-wave plate. FIGs. 18A and 18B are each a diagram describing the optical function of the third retarder 25. FIGs. 18C and 18D are each a diagram describing the optical function of the fourth retarder 26. FIGs. 18A and 18C each illustrate the Poincaré sphere viewed from the north pole (in the S3-direction). FIGs. 18B and 18D each illustrate the Poincaré sphere viewed laterally (in the S1-direction). $S_{LCD}$, $S_{25}$, $S_{26}$, $S_{RP}$, and $S_{AP}$ are as described above.

As illustrated in FIGs. 18C and 18D, when the third retarder 25 is a quarter-wave plate and the fourth retarder 26 is a half-wave plate, $S_{26}$ is near $S_{AP}$. This can reduce the likelihood that the user 22 directly views the real image of the display panel 2, thus reducing deterioration in the display quality of the display device 1.

FIG. 19 is a graph showing the relationship between the light transmittance of an optical system including the third retarder 25 and the fourth retarder 26 located between polarizers PP1 and PP2 having the transmission axes perpendicular to each other, and the phase differences of the third retarder 25 and the fourth retarder 26. FIG. 19 shows the results obtained through simulations. Green light with a wavelength λ of 550 nm is used as incident light. The polarizer PP1, the third retarder 25, the fourth retarder 26, and the polarizer PP2 are arranged in this order in the traveling direction of the incident light. The polarizer PP1 simulates the polarizer frontward from the display panel 2. The polarizer PP2 simulates the reflective polarizer 8.

In the graph in FIG. 19, the solid line indicates the transmittance with the phase difference of the third retarder 25 being varied while the phase difference of the fourth retarder 26 being fixed to 0 nm. The transmittance is the lowest when the phase difference of the third retarder 25 is about 275 nm (half the wavelength λ of the incident light). In the graph in FIG. 19, the dashed line indicates the transmittance with the phase difference of the fourth retarder 26 being varied while the phase difference of the third retarder 25 being fixed to 270 nm. The transmittance is the lowest when the phase difference of the fourth retarder 26 is about 275 nm (half the wavelength λ of the incident light).

The simulation results in the graph in FIG. 19 show that, when the third retarder 25 and the fourth retarder 26 are half-wave plates, the display device 1 can effectively reduce the likelihood that the user 22 directly views the real image of the display panel 2 and thus effectively reduce deterioration in the display quality of the display device 1. The results also show that, when the phase difference of the fourth retarder 26 is fixed to 0 nm (in other words, when the display device 1 includes the third retarder 25 without including the fourth retarder 26), the third retarder 25 that introduces a phase difference greater than 0 nm (in other words, nonzero) to the light incident on the third retarder 25 allows the display device 1 to effectively reduce the likelihood that the user 22 directly views the real image of the display panel 2 and thus effectively reduce deterioration in the display quality of the display device 1.

The display devices 1A and 1A' each also have the same or a similar structure. The display device 1A or 1A' may include the third retarder 25 between the display panel 2 and the polarizer 15. This structure can reduce the likelihood that the user 22 directly views the real image of the display panel 2, thus reducing deterioration in the display quality of the display device 1A or 1A'. The display device 1A or 1A' may further include the fourth retarder 26 between the display panel 2 and the polarizer 15. This structure can further reduce the likelihood that the user 22 directly views the real image of the display panel 2, thus further reducing deterioration in the display quality of the display device 1A or 1A'. Each of the third retarder 25 and the fourth retarder 26 may be, for example, a half-wave plate, a quarter-wave plate, an eighth-wave plate, a sixteenth-wave plate, or another waveplate that introduces any other phase difference. One of the third retarder 25 or the fourth retarder 26 may be a quarter-wave plate, and the other may be a half-wave plate. This structure can effectively reduce deterioration in the display quality of the display device 1. Both the third retarder 25 and the fourth retarder 26 may be half-wave plates. This structure can more effectively reduce deterioration in the display quality of the display device 1. The third retarder 25 and the fourth retarder 26 may be at any positions between the display panel 2 and the polarizer 15.

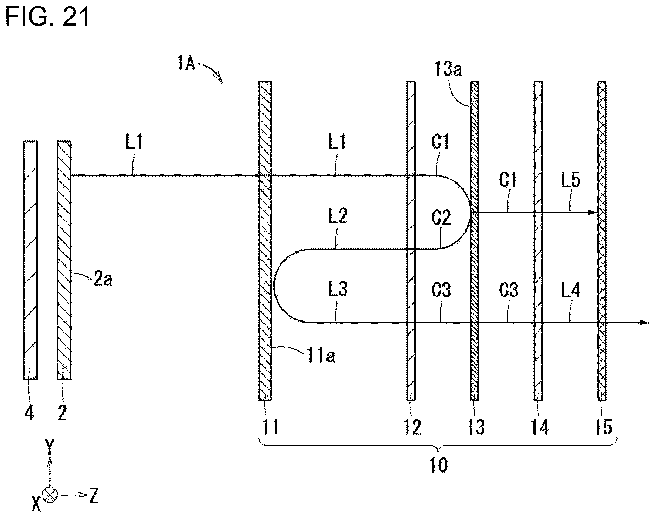

Another example of the display device 1, 1A, 1A', or 1B will now be described. FIG. 20 is a cross-sectional view of another example of the display device 1A'. FIG. 21 is a cross-sectional view of another example of the display device 1A.

The second semitransmissive mirror 13' in the display device 1A' may include a holographic optical element (HOE). This structure achieves the optical function of the second semitransmissive mirror 13' using an optical element being a flat plate as illustrated in FIG. 20, thus reducing the thickness of the second semitransmissive mirror 13' in the depth direction (Z-direction). This can reduce the size of the display device 1A' in the depth direction. Further, the second semitransmissive mirror 13' being an optical element that is a flat plate can be placed close to or in contact with the second retarder 14, thus further reducing the size of the display device 1A' in the depth direction.

The first semitransmissive mirror 11 in the display device 1A' may include an HOE. This structure achieves the optical function of the first semitransmissive mirror 11 using an optical element being a flat plate as illustrated in FIG. 20, thus reducing the thickness of the first semitransmissive mirror 11 in the depth direction. This can reduce the size of the display device 1A' in the depth direction. Further, the first semitransmissive mirror 11 being an optical element that is a flat plate can be placed close to or in contact with the display panel 2, thus further reducing the size of the display device 1A' in the depth direction.

When the first semitransmissive mirror 11 is not polarization-selective, the amount of light emitted from the display device 1A' may be smaller, possibly lowering the luminance of the virtual image V viewed by the user 22. Thus, the first semitransmissive mirror 11 including the HOE may be polarization-selective. For example, the first semitransmissive mirror 11 including the HOE may include, on the surface facing the display panel 2 or on the surface facing the first retarder 12, multiple thin metal wires (a metal nanowire grid) that are polarization-selective to transmit s-polarized light and reflect p-polarized light. This structure can avoid lowering the luminance of the virtual image V viewed by the user 22.

The first semitransmissive mirror 11 in the display device 1A may include an HOE. This structure achieves the optical function of the first semitransmissive mirror 11 using an optical element being a flat plate as illustrated in FIG. 21, thus reducing the thickness of the first semitransmissive mirror 11 in the depth direction. This can reduce the size of the display device 1A in the depth direction. Further, the first semitransmissive mirror 11 being an optical element that is a flat plate can be placed close to or in contact with the display panel 2, thus further reducing the size of the display device 1A in the depth direction. The first semitransmissive mirror 11 including the HOE may be polarization-selective. For example, the first semitransmissive mirror 11 including the HOE may include, on the surface facing the display panel 2 or on the surface facing the first retarder 12, multiple thin metal wires that are polarization-selective to transmit s-polarized light and reflect p-polarized light. This structure can avoid lowering the luminance of the virtual image V viewed by the user 22.

The semitransmissive mirror 6 in the display device 1 may include an HOE. This structure achieves the optical function of the semitransmissive mirror 6 using an optical element being a flat plate, thus reducing the thickness of the semitransmissive mirror 6 in the depth direction. This can reduce the size of the display device 1 in the depth direction. Further, the semitransmissive mirror 6 being an optical element that is a flat plate can be placed close to or in contact with the first retarder 5, thus further reducing the size of the display device 1 in the depth direction.

The first semitransmissive mirror 17 in the display device 1B may include an HOE. This structure achieves the optical function of the first semitransmissive mirror 17 using an optical element being a flat plate, thus reducing the thickness of the first semitransmissive mirror 17 in the depth direction. This can reduce the size of the display device 1B in the depth direction. Further, the first semitransmissive mirror 17 being an optical element that is a flat plate can be placed close to or in contact with the display panel 2, thus further reducing the size of the display device 1B in the depth direction. The first semitransmissive mirror 17 including the HOE may be polarization-selective. For example, the first semitransmissive mirror 17 including the HOE may include, on the surface facing the display panel 2 or on the surface facing the first retarder 18, multiple thin metal wires that are polarization-selective to transmit s-polarized light and reflect p-polarized light. This structure can avoid lowering the luminance of the virtual image V viewed by the user 22.

The third semitransmissive mirror 21 in the display device 1B may include an HOE. This structure achieves the optical function of the third semitransmissive mirror 21 using an optical element being a flat plate, thus reducing the thickness of the third semitransmissive mirror 21 in the depth direction. This can reduce the size of the display device 1B in the depth direction. The third semitransmissive mirror 21 including the HOE may be polarization-selective. For example, the third semitransmissive mirror 21 including the HOE may include, on the surface facing the second retarder 20 or on the surface opposite to the surface facing the second retarder 20, multiple thin metal wires that are polarization-selective to reflect s-polarized light and transmit p-polarized light. This structure can reduce deterioration in the quality of the virtual image V viewed by the user 22, and can also avoid lowering the luminance of the virtual image V.

The HOE may have, for example, an interference pattern and may be configured to diffract incident light in a predetermined direction.

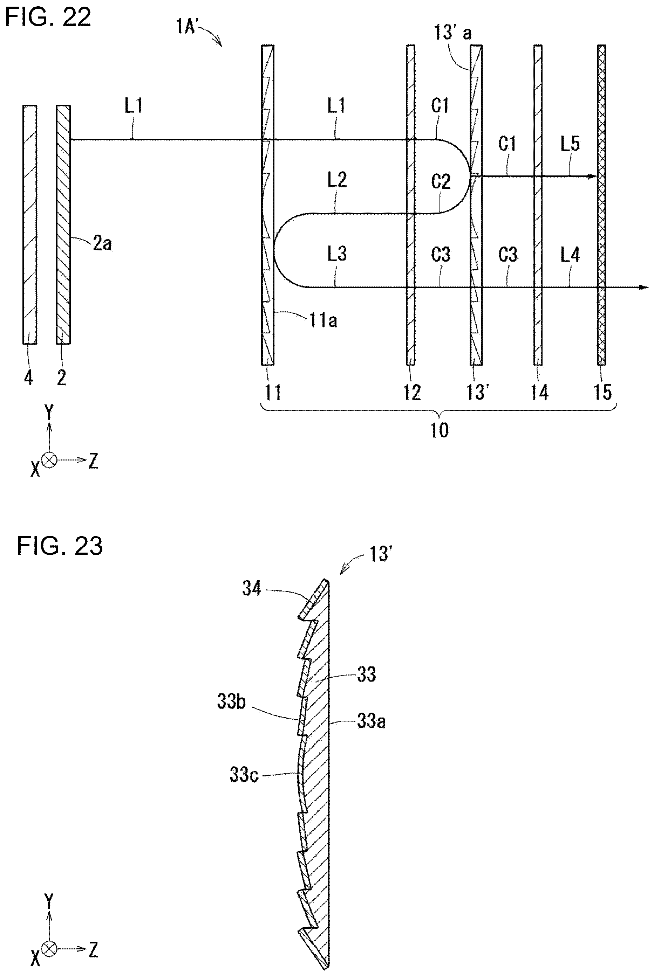

The second semitransmissive mirror 13' in the display device 1A' may include a Fresnel lens. This structure achieves the optical function of the second semitransmissive mirror 13' using an optical element that is a substantially flat plate with a smaller thickness (the dimension in the depth direction) than a convex semitransparent mirror as illustrated in FIG. 22, thus reducing the thickness of the second semitransmissive mirror 13' in the depth direction. This can reduce the size of the display device 1A' in the depth direction. Further, the second semitransmissive mirror 13' being an optical element that is a substantially flat plate can be placed close to or in contact with the second retarder 14, thus further reducing the size of the display device 1A' in the depth direction. The second semitransmissive mirror 13' including the Fresnel lens is also referred to as a Fresnel semitransparent mirror 13'.

As illustrated in FIG. 23, the Fresnel semitransparent mirror 13' may include a Fresnel lens (Fresnel convex lens) 33 and a semitransmissive reflective layer 34. The Fresnel lens 33 may include a first surface 33a being flat and facing the second retarder 14 and a second surface 33b having a Fresnel configuration and facing the first retarder 12. The semitransmissive reflective layer 34 may be located on the second surface 33b. The Fresnel configuration includes concentric circular grooves centered at a reference point 33c. Each of the grooves includes a surface substantially perpendicular to the first surface 33a and an inclined surface inclined with respect to the first surface 33a. The inclined surface may be a curved surface or a flat surface. The semitransmissive reflective layer 34 may be located on the inclined surface of the Fresnel configuration. The semitransmissive reflective layer 34 may transmit a part (e.g., substantially 50%) of incident light and reflect the remaining part (e.g., substantially 50%). The semitransmissive reflective layer 34 may be a metal thin film. The metal thin film may be made of a metal material such as aluminum or chromium. The metal thin film may be formed with, for example, a vacuum deposition method such as chemical vapor deposition (CVD) or physical vapor deposition (PVD).

The Fresnel semitransparent mirror 13' has the optical function of a lens and the optical function of a semitransparent mirror. The optical function of a lens (e.g., the focal length) is determined by, for example, the curvature or the inclination angle of the inclined surface or by the refractivity of the material for the Fresnel lens 33. The optical function of a semitransparent mirror (e.g., the focal length or the transmittance) is determined by, for example, the curvature or the inclination angle of the inclined surface or by the transmittance of the semitransmissive reflective layer 34.

The surface of the Fresnel semitransparent mirror 13' facing the second retarder 14 may be flat with a transparent material layer smoothing the second surface 33b of the Fresnel lens 33. The transparent material layer may be made of a material having substantially the same refractivity as the material for the Fresnel lens 33. The transparent material layer may be made of a material that is the same as the material for the Fresnel lens 33.

The first semitransmissive mirror 11 in the display device 1A' may include a Fresnel lens. This structure can reduce the thickness of the first semitransmissive mirror 11 as illustrated in FIG. 22, and can thus reduce the size of the display device 1A' in the depth direction. Further, the first semitransmissive mirror 11 including the Fresnel lens and being a substantially flat plate can be placed close to or in contact with the display panel 2, thus further reducing the size of the display device 1A' in the depth direction. The first semitransmissive mirror 11 including the Fresnel lens is also referred to as a Fresnel semitransparent mirror 11. The Fresnel semitransparent mirror 11 may have the same structure as or a similar structure to the Fresnel semitransparent mirror 13'. The Fresnel semitransparent mirror 11 may include a Fresnel concave lens.

When the first semitransmissive mirror 11 is replaced with the Fresnel semitransparent mirror 11 that is not polarization-selective, the amount of light emitted from the display device 1A' may be smaller, possibly lowering the luminance of the virtual image V viewed by the user 22. Thus, the Fresnel semitransparent mirror 11 may be polarization-selective. For example, the Fresnel semitransparent mirror 11 may include, on the surface facing the display panel 2 or on the surface facing the first retarder 12, multiple thin metal wires (a metal nanowire grid) that are polarization-selective to transmit s-polarized light and reflect p-polarized light. This can avoid lowering the luminance of the virtual image V viewed by the user 22.

The first semitransmissive mirror 11 in the display device 1A may include a Fresnel lens, as illustrated in FIG. 23. This structure can reduce the thickness of the first semitransmissive mirror 11, and can thus reduce the size of the display device 1A in the depth direction. Further, the first semitransmissive mirror 11 including the Fresnel lens and being a substantially flat plate can be placed close to or in contact with the display panel 2, thus further reducing the size of the display device 1A in the depth direction. The first semitransmissive mirror 11 including the Fresnel lens may be polarization-selective. For example, the first semitransmissive mirror 11 including the Fresnel lens may include, on the surface facing the display panel 2 or on the surface facing the first retarder 12, multiple thin metal wires that are polarization-selective to transmit s-polarized light and reflect p-polarized light. This structure can avoid lowering the luminance of the virtual image V viewed by the user 22.

The semitransmissive mirror 6 in the display device 1 may include a Fresnel lens. This structure can reduce the thickness of the semitransmissive mirror 6, and can thus reduce the size of the display device 1 in the depth direction. Further, the semitransmissive mirror 6 including the Fresnel lens and being a substantially flat plate can be placed close to or in contact with the first retarder 5, thus further reducing the size of the display device 1 in the depth direction.

The first semitransmissive mirror 17 in the display device 1B may include a Fresnel lens. This structure can reduce the thickness of the first semitransmissive mirror 17, and can thus reduce the size of the display device 1B in the depth direction. Further, the first semitransmissive mirror 17 including the Fresnel lens and being a substantially flat plate can be placed close to or in contact with the display panel 2, thus further reducing the size of the display device 1B in the depth direction. The first semitransmissive mirror 17 including the Fresnel lens may be polarization-selective. For example, the first semitransmissive mirror 17 including the Fresnel lens may include, on the surface facing the display panel 2 or on the surface facing the first retarder 18, multiple thin metal wires that are polarization-selective to transmit s-polarized light and reflect p-polarized light. This structure can avoid lowering the luminance of the virtual image V viewed by the user 22.

The third semitransmissive mirror 21 in the display device 1B may include a Fresnel lens. This structure can reduce the thickness of the third semitransmissive mirror 21, and can thus reduce the size of the display device 1B in the depth direction. The third semitransmissive mirror 21 including the Fresnel lens may be polarization-selective. For example, the third semitransmissive mirror 21 including the Fresnel lens may include, on the surface facing the second retarder 20 or on the surface opposite to the surface facing the second retarder 20, multiple thin metal wires that are polarization-selective to reflect s-polarized light and transmit p-polarized light. This structure can reduce deterioration in the quality of the virtual image V viewed by the user 22, and can also avoid lowering the luminance of the virtual image V.

The control of the additional view area in the imaging device 100 (the display device 1, 1A, 1A', or 1B) will now be described. In the example described below, the imaging device 100 is a digital rearview mirror (refer to FIG. 10). The imaging device 100 includes an angle sensor that detects the orientation of the display device 1, 1A, 1A', or 1B with respect to a predetermined direction fixed for the movable body 23. For example, the predetermined direction may be, but not limited to, the vehicle length direction of the movable body 23. The angle sensor may be a three-axis angle sensor that can detect the orientation (roll, pitch, and yaw) of the display device 1, 1A, 1A', or 1B. The movable body 23 includes a driver monitoring system (DMS) that can communicate with and be controlled by the imaging device 100. The DMS can capture an image of the face of the user 22 seated in the driver's seat of the movable body 23, perform face recognition of the user 22, and determine whether the user 22 is a known user. A known user may refer to a user having information (also referred to as user information) stored in at least one of the storage in the controller 43 or a storage in the DMS. The user information includes, for example, features used for face recognition and the eye positions or the face orientation during driving.

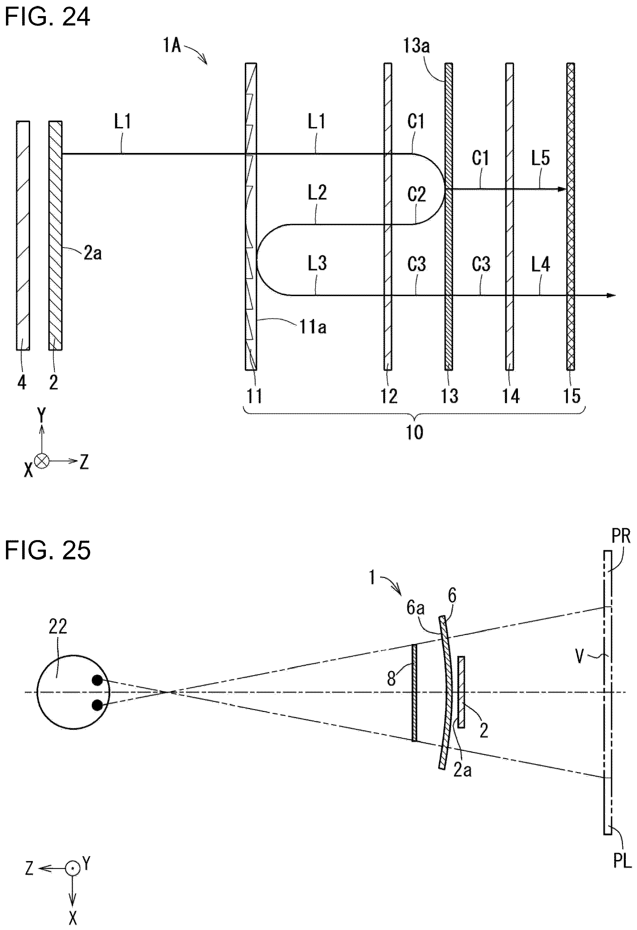

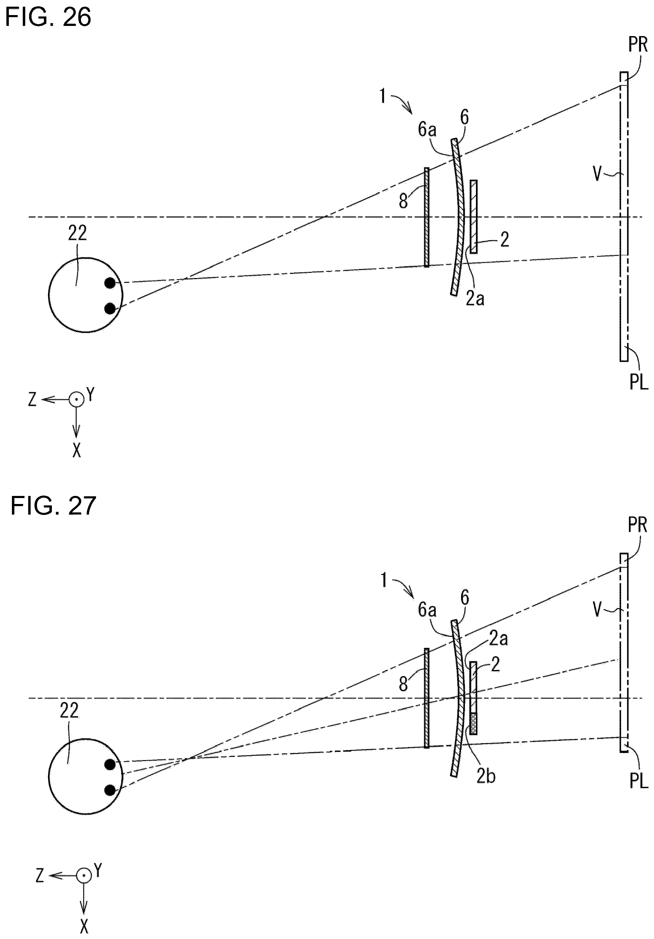

When the user 22 is in front of the display device 1, 1A, 1A', or 1B, a left additional view area PL and a right additional view area PR have substantially the same size (refer to FIG. 25). Thus, the user 22 can view the virtual image V that changes with head movement, in the same manner as or in a similar manner to when the user 22 uses an ordinary rearview mirror. When the user 22 is not in front of the display device 1, 1A, 1A', or 1B, the left additional view area PL and the right additional view area PR have different sizes (refer to FIG. 26). The user 22 thus cannot view the virtual image V that changes with head movement, unlike when using an ordinary rearview mirror, and can feel discomfort.

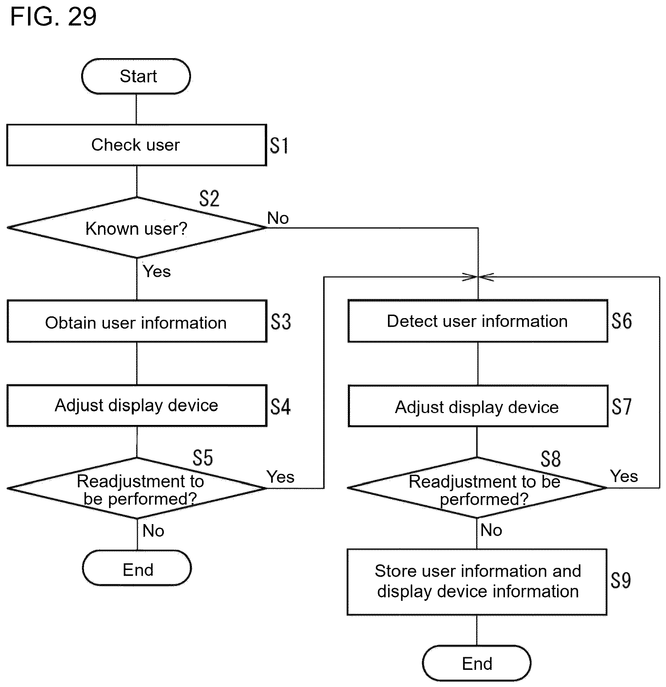

The control of the imaging device 100 performed by the controller 43 will now be described with reference to the flowchart in FIG. 29. In the flowchart, "step" is abbreviated as "S", "positive" (a computer flag of 1) in determination control is indicated by Yes, and "negative" (a computer flag of 0) in determination control is indicated by No.

**[0165]** The processing in the flowchart in FIG. 29 starts in response to, for example, the user 22 being seated in the driver's seat of the movable body 23 and starting the engine of the movable body 23.

In S1, the DMS is controlled to check the user 22 seated in the driver's seat of the movable body 23 (check user).

In S2, the DMS is controlled to perform face recognition of the user 22 seated in the driver's seat and determine whether the user 22 is a known user. When the user 22 is a known user (Yes) in S2, the processing advances to S3. When the user 22 is not a known user (No) in S2, the processing advances to S7.

In step S3, user information of the user 22 (information of, for example, the eye positions or the face orientation during driving) is obtained from the DMS.

In S4, the display device 1, 1A, 1A', or 1B is adjusted based on the user information obtained in S3. Adjusting the display device 1, 1A, 1A', or 1B may include shifting a display area for displaying an image on the display surface 2a of the display panel 2 based on, for example, the orientation of the display device 1, 1A, 1A', or 1B or the eye positions or the face orientation of the user 22. Shifting the display area may include switching a part of the display surface 2a to a non-display area 2b on which no image is displayed, as illustrated in FIG. 27. Shifting the display area for displaying an image on the display surface 2a as illustrated in FIG. 27 allows the left additional view area PL and the right additional view area PR to have substantially the same size when the user 22 is not in front of the display device 1, 1A, 1A', or 1B. This can reduce the likelihood that the user 22 feels discomfort.

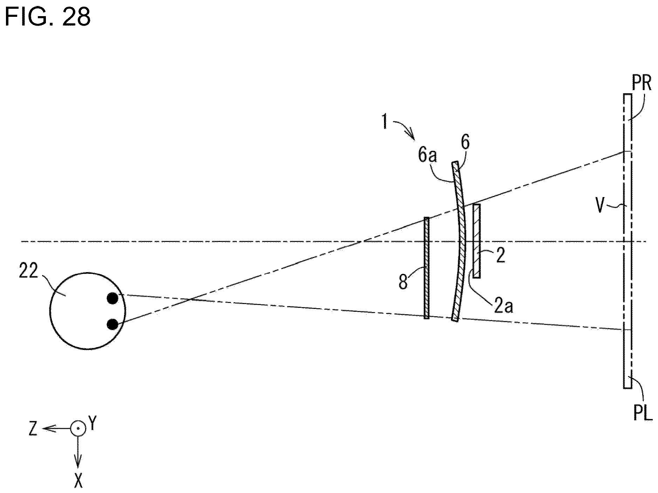

Adjusting the display device 1, 1A, 1A', or 1B may include sliding (translating) at least one of the reflective polarizer 8, the semitransmissive mirror 6, or the display panel 2 in a direction perpendicular to the emission direction of the display light from the display panel 2 based on, for example, the orientation of the display device 1, 1A, 1A', or 1B or the eye positions or the face orientation of the user 22. Sliding at least one of the reflective polarizer 8, the semitransmissive mirror 6, or the display panel 2 allows the left additional view area PL and the right additional view area PR to have substantially the same size as illustrated in FIG. 28. This can reduce the likelihood that the user 22 feels discomfort. Sliding at least one of the reflective polarizer 8, the semitransmissive mirror 6, or the display panel 2 can reduce the likelihood that the left additional view area PL and the right additional view area PR are smaller than when the user 22 is in front of the display device 1, 1A, 1A', or 1B.

In S5, the controller 43 receives an instruction from the user 22 indicating whether to readjust the display device 1, 1A, 1A', or 1B. The imaging device 100 may be configured to receive an instruction to perform readjustment in response to, for example, the user 22 operating a button on a steering wheel. The imaging device 100 may be configured to receive an instruction to perform readjustment in response to the user 22 turning the imaging device 100 and changing the orientation of the imaging device 100. A change in the orientation of the imaging device 100 may be detected by the three-axis angle sensor included in the imaging device 100. Note that the controller 43 may determine that no readjustment is to be performed in response to no instruction within a predetermined time after starting receiving an instruction from the user 22. For example, the predetermined time may be, but not limited to, about 3 to 10 seconds.

When the display device 1, 1A, 1A', or 1B is determined to be readjusted (Yes) in S5, the processing advances to S6. When the display device 1, 1A, 1A', or 1B is determined not to be readjusted (No) in S5, the processing in the flowchart ends. Note that the processing may advance to S7 when the display device 1, 1A, 1A', or 1B is determined to be readjusted (Yes) in S5.

In S6, the controller 43 controls the DMS to detect the user information of the user 22 (information of, for example, the eye positions or the face orientation during driving), and obtains the user information of the user 22 from the DMS.

In S7, the display device 1, 1A, 1A', or 1B is adjusted based on the user information obtained in S6. The display device 1, 1A, 1A', or 1B may be adjusted as in S4.

In S8, an instruction indicating whether to readjust the display device 1, 1A, 1A', or 1B is received from the user 22. An instruction from the user 22 may be received as in S5. When the display device 1, 1A, 1A', or 1B is determined to be readjusted (Yes) in S8, the processing returns to S6. When the display device 1, 1A, 1A', or 1B is determined not to be readjusted (No) in S8, the processing advances to S9. Note that the processing may return to S7 when the display device 1, 1A, 1A', or 1B is determined to be readjusted (Yes) in S8.

In S9, the controller 43 stores the user information of the user 22 and information about adjustment of the display device 1, 1A, 1A', or 1B into at least one of the storage in the controller 43 or the storage in the DMS, and ends the processing in the flowchart.

**EP 4 603 892 A1**

The processing in the flowchart in FIG. 29 allows efficient control of the additional view area in the digital rearview mirror, thus reducing the likelihood that the user 22 feels discomfort. Note that the processing in the flowchart in FIG. 29 may also be used when the imaging device 100 is used in a digital sideview mirror.

Another example of the display device 1, 1A, 1A', or 1B will now be described. The components that are the same as or similar to the components of the display device 1, 1A, 1A', or 1B are denoted by the same reference numerals and will not be described in detail. In this example, as illustrated in FIG. 33, a display device 1C includes the display panel 2, an optical system 35, and the housing 36.

The display panel 2 includes the display surface 2a to display an image. The optical system 35 projects display light emitted from the display panel 2 in the field of view of the user 22 as the virtual image V. The optical system 35 may be the optical system 3 (refer to FIGs. 2, 3, and 30), the optical system 10 (refer to FIGs. 4, 5, and 31), or the optical system 16 (refer to FIGs. 9 and 32). In the examples in FIGs. 33 to 36, the optical system 35 is the optical system 3 illustrated in FIG. 30.

The housing 36 accommodates the display panel 2 and the optical system 35. The housing 36 may hold the display panel 2 and the optical system 35. When the display device 1C includes the illuminator 4, the housing 36 may accommodate and hold the illuminator 4. The housing 36 includes the window (opening) 37 that transmits light emitted from the optical system 35. In the display device 1C, the window 37 may overlap the display panel 2 when viewed through the window 37 in the housing 36. In the display device 1C, the window 37 may overlap the optical system 35 when viewed through the window 37 in the housing 36. In the display device 1C, the display panel 2 may overlap the optical system 35 when viewed through the window 37 in the housing 36. With this structure, the display device 1C uses a smaller space and can be smaller. In the display device 1C, the display light emitted from the display panel 2 travels substantially along a single axis to form the virtual image V. This can reduce, for example, distortion or uneven luminance of the virtual image V viewed by the user 22, and also facilitates the design of the optical system 35.

As illustrated in FIGs. 33 and 34, the housing 36 may include the light-transmissive plate 38 in the window 37. The light-transmissive plate 38 may transmit light emitted from the optical system 35. The light-transmissive plate 38 at least partly covers the window 37. The light-transmissive plate 38 may be made of, for example, glass or a resin.

The optical system 35 (optical system 3) may include the third retarder 25 and the fourth retarder 26. The third retarder 25 may be located on the surface of the second retarder 7 facing the semitransmissive mirror 6. The fourth retarder 26 may be located on the surface of the third retarder 25 facing the semitransmissive mirror 6. This allows the relative angle between the transmission axis of the polarizer frontward from the display panel 2 and the transmission axis of the reflective polarizer 8 to be close to the crossed Nicols arrangement when the user 22 is not in front of the display device 1C. This can reduce deterioration in the display quality of the display device 1C. The third retarder 25 and the fourth retarder 26 may be, but not limited to, half-wave plates. Each of the third retarder 25 and the fourth retarder 26 may be, for example, a quarter-wave plate, an eighth-wave plate, a sixteenth-wave plate, or another waveplate that introduces any other phase difference. The third retarder 25 and the fourth retarder 26 may be waveplates that introduce the same phase difference or different phase differences. The third retarder 25 may have the optical axis substantially parallel to or substantially perpendicular to the transmission axis of the reflective polarizer 8.

The optical system 35 (optical system 3) may include a moth-eye film 39 on the surface of the first retarder 5 facing the semitransmissive mirror 6. The moth-eye film 39 can reduce reflection of incident light transmitted through the semitransmissive mirror 6. This can reduce the likelihood that, for example, unintended light or ambient light is reflected by the first retarder 5, emitted from the display device 1C, and incident on the eyes of the user 22.

The optical system 35 (optical system 3) may include a moth-eye film 40 on the surface of the fourth retarder 26 facing the semitransmissive mirror 6. This can reduce the likelihood that, for example, unintended light or ambient light is reflected by the fourth retarder 26, emitted from the display device 1C, and incident on the eyes of the user 22.

The reflective polarizer 8, the second retarder 7, the third retarder 25, the fourth retarder 26, and the moth-eye film 40 may be integral with the light-transmissive plate 38. This allows the display device 1C to be thinner in the depth direction (Z-direction). The structure can also reduce deformation of the reflective polarizer 8, the second retarder 7, the third retarder 25, the fourth retarder 26, the moth-eye film 40, and the light-transmissive plate 38.

The display device 1C may include the touchscreen 41. The touchscreen 41 may at least partly cover the window 37. As illustrated in FIGs. 35 and 36, the touchscreen 41 may be attached to the housing 36. As illustrated in FIGs. 35 and 36, the touchscreen 41 may be attached to the housing 36 and may cover the window 37 in which the light-transmissive plate 38 is located. The touchscreen 41 may cover the light-transmissive plate 38. The touchscreen 41 is connected to the controller 43 with a wired or wireless communication line to communicate with the controller 43. This allows the user 22 to operate the display device 1C through the touchscreen 41. The touchscreen 41 may be any known touchscreen.

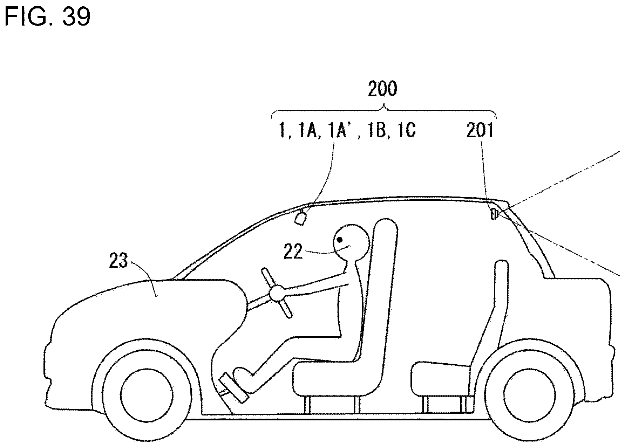

A display system 200 according to one or more embodiments of the present disclosure will now be described. As illustrated in FIG. 39, the display system 200 includes the display device 1, 1A, 1A', 1B, or 1C and a camera 201. The display panel 2 in the display device 1, 1A, 1A', 1B, or 1C can communicate with the camera 201 to display an image captured by the camera 201. The display panel 2 and the camera 201 may be connected to each other, for example, with a wire, wirelessly, or with a CAN.

**24**

In one or more embodiments of the present disclosure, the movable body (vehicle) 23 includes the display system 200. The display device 1, 1A, 1A', 1B, or 1C, which is small, can avoid using a large space inside the driver's cabin in the vehicle 23 and avoid interfering with driving. This allows the user 22 to appropriately view the virtual image V or the real image. The display system 200 may be used in a digital rearview mirror in the vehicle 23 or in digital sideview mirrors 1L and 1R (refer to FIG. 12). The display system 200 may be used in, for example, the cluster 29, the CID 30, or the PID 31 in the dashboard in the vehicle 23, or in the RSE system 32 (refer to FIGs. 10 and 12).

In one or more embodiments of the present disclosure, the display device can be small, have less deterioration in display quality, and have higher light use efficiency. In one or more embodiments of the present disclosure, the imaging device can be small and allow a user to view a virtual image with high visibility.

Although embodiments of the present disclosure have been described in detail, the present disclosure is not limited to the above embodiments, and may be changed or varied variously without departing from the spirit and scope of the present disclosure. The technical features described in different embodiments may be combined as appropriate in other embodiments within the technical scope of the invention in the present disclosure. For example, the functions of the components are reconfigurable unless any contradiction arises. Multiple components may be combined into a single unit, or a single component may be divided into separate units. In other words, those skilled in the art can easily make various variations or alterations based on one or more embodiments of the present disclosure. Such changes, variations, or alterations also fall within the scope of the present disclosure.

The display device according to one or more embodiments of the present disclosure may have aspects (1) to (48) described below.

(1) A display device, comprising:

a display panel configured to emit display light being linearly polarized light;
a first retarder facing the display panel;
a second retarder spaced from the first retarder;
a reflective polarizer configured to transmit polarized light having a polarization axis parallel to a polarization axis of the display light and reflect polarized light having a polarization axis perpendicular to the polarization axis of the display light; and
a semitransmissive mirror between the first retarder and the second retarder, the semitransmissive mirror including a reflective surface facing the second retarder,
wherein each of the first retarder and the second retarder is a quarter-wave plate.

(1') A display device, comprising:

a display panel configured to emit display light;
a first retarder facing the display panel;
a second retarder spaced from the first retarder;
a reflective polarizer facing the second retarder, the reflective polarizer being configured to transmit first polarized light and reflect second polarized light; and
a semitransmissive mirror between the first retarder and the second retarder, the semitransmissive mirror including a reflective surface facing the second retarder,
wherein the first retarder and the second retarder are configured to convert the display light to the first polarized light and the second polarized light.

(2) The display device according to (1), wherein
the first retarder and the second retarder are spaced from each other with air between the first retarder and the second retarder.
(3) The display device according to (1) or (2), further comprising:
a third retarder between the display panel and the reflective polarizer.
(4) The display device according to (3), further comprising:
a fourth retarder between the display panel and the reflective polarizer.
(5) The display device according to (4), wherein
one of the third retarder or the fourth retarder is a quarter-wave plate, and the other of the third retarder or the fourth retarder is a half-wave plate.
(6) The display device according to (4), wherein
each of the third retarder and the fourth retarder is a half-wave plate.
(7) The display device according to any one of (1) to (6), wherein
the reflective surface of the semitransmissive mirror is concave.

(8) The display device according to any one of (1) to (6), wherein
the semitransmissive mirror is an optical element being a flat plate including a holographic optical element.
(9) The display device according to any one of (1) to (6), wherein
the semitransmissive mirror includes a Fresnel lens.
(10) The display device according to (8) or (9), wherein
the semitransmissive mirror is integral with at least one of the first retarder or the second retarder.
(11) A display device, comprising:

   a display panel configured to emit display light being linearly polarized light;
   a first retarder facing the display panel;
   a second retarder spaced from the first retarder;
   a first semitransmissive mirror between the display panel and the first retarder, the first semitransmissive mirror including a first reflective surface facing the first retarder;
   a second semitransmissive mirror between the first retarder and the second retarder, the second semitransmissive mirror including a second reflective surface facing the first retarder; and
   a polarizer facing the second retarder,
   wherein each of the first retarder and the second retarder is a quarter-wave plate.

(11') A display device, comprising:

   a display panel configured to emit display light;
   a first retarder facing the display panel;
   a second retarder spaced from the first retarder;
   a first semitransmissive mirror between the display panel and the first retarder, the first semitransmissive mirror including a first reflective surface facing the first retarder;
   a second semitransmissive mirror between the first retarder and the second retarder, the second semitransmissive mirror including a second reflective surface facing the first retarder; and
   a polarizer facing the second retarder,
   wherein the first retarder and the second retarder are configured to convert the display light to first polarized light to be transmitted through the polarizer and second polarized light to be transmitted through the polarizer with less transmission than the first polarized light.

(12) The display device according to (11), wherein
the second reflective surface is a surface convex toward the first retarder.
(13) The display device according to (11) or (12), wherein
the first semitransmissive mirror and the first retarder are spaced from each other with air between the first semitransmissive mirror and the first retarder.
(14) The display device according to any one of (11) to (13), further comprising:
a third retarder between the display panel and the polarizer.
(15) The display device according to (14), further comprising:
a fourth retarder between the display panel and the polarizer.
(16) The display device according to (15), wherein
one of the third retarder or the fourth retarder is a quarter-wave plate, and the other of the third retarder or the fourth retarder is a half-wave plate.
(17) The display device according to (15), wherein
each of the third retarder and the fourth retarder is a half-wave plate.
(18) The display device according to any one of (11) to (17), wherein
the first reflective surface is concave.
(19) The display device according to any one of (11) to (17), wherein
each of the first semitransmissive mirror and the second semitransmissive mirror is an optical element being a flat plate including a holographic optical element.
(20) The display device according to any one of (11) to (17), wherein
each of the first semitransmissive mirror and the second semitransmissive mirror includes a Fresnel lens.
(21) The display device according to (19) or (20), wherein
the first semitransmissive mirror is integral with at least one of the display panel or the first retarder.
(22) The display device according to (19) or (20), wherein
the second semitransmissive mirror is integral with at least one of the first retarder or the second retarder.
(23) A display device, comprising:

a display panel configured to emit display light being linearly polarized light;

a first retarder facing the display panel;

a second retarder spaced from the first retarder;

a first semitransmissive mirror between the display panel and the first retarder, the first semitransmissive mirror including a first reflective surface facing the first retarder;

a second semitransmissive mirror between the first retarder and the second retarder, the second semitransmissive mirror including a second reflective surface facing the first retarder and a third reflective surface facing the second retarder; and

a third semitransmissive mirror including a fourth reflective surface facing the second retarder,

wherein each of the first retarder and the second retarder is a quarter-wave plate.

(23') A display device, comprising:

a display panel configured to emit display light;

a first retarder configured to transmit the display light;

a second retarder spaced from the first retarder;

a first semitransmissive mirror between the display panel and the first retarder, the first semitransmissive mirror including a first reflective surface facing the first retarder;

a second semitransmissive mirror between the first retarder and the second retarder, the second semitransmissive mirror including a second reflective surface facing the first retarder and a third reflective surface facing the second retarder; and

a third semitransmissive mirror including a fourth reflective surface facing the second retarder.

(24) The display device according to (23), wherein
the first semitransmissive mirror and the first retarder are spaced from each other with air between the first semitransmissive mirror and the first retarder, and the third semitransmissive mirror and the second retarder are spaced from each other with air between the third semitransmissive mirror and the second retarder.

(25) The display device according to (23) or (24), wherein
each of the first reflective surface and the fourth reflective surface is concave.

(26) The display device according to (23) or (24), wherein
each of the first semitransmissive mirror and the third semitransmissive mirror is an optical element being a flat plate including a holographic optical element.

(27) The display device according to (23) or (24), wherein
each of the first semitransmissive mirror and the third semitransmissive mirror includes a Fresnel lens.

(28) The display device according to (26) or (27), wherein
the first semitransmissive mirror is integral with at least one of the display panel or the first retarder.

(29) The display device according to any one of (26) to (28), wherein
the second semitransmissive mirror is integral with the second retarder.

(30) The display device according to any one of (1) to (29), wherein

the display light includes display light of a left-eye image and display light of a right-eye image, and
the display device further comprises an optical element configured to define a traveling direction of the display light of the left-eye image and a traveling direction of the display light of the right-eye image.

(31) An imaging device, comprising:
the display device according to any one of (1) to (30).

(32) The imaging device according to (31), wherein
the imaging device is configured to project a virtual image in a field of view of a user, and the virtual image includes a binocular viewable area viewable with a left eye and a right eye of the user, a left-eye viewable area viewable with the left eye without the right eye, and a right-eye viewable area viewable with the right eye without the left eye.

(33) A display device, comprising:

a display panel;

an optical system configured to project display light emitted from the display panel as a virtual image or a real image; and

a housing accommodating the display panel and the optical system,

wherein the housing includes a window configured to transmit light emitted from the optical system, and

the window, the optical system, and the display panel overlap one another when viewed through the window in the housing.

(34) The display device according to (33), wherein
the housing includes a light-transmissive plate in the window.
(35) The display device according to (34), further comprising:
a touchscreen attached to the housing and covering the light-transmissive plate.
(36) The display device according to any one of (1) to (30) and (33) to (35), further comprising:
an illuminator configured to illuminate a surface of the display panel opposite to a display surface of the display panel.
(37) The display device according to any one of (1) to (30) and (33) to (36), further comprising:
a controller configured to control at least one of an image displayed on the display panel or the illuminator.
(38) A vehicle, comprising:
the display device according to (37).
(39) A display device, comprising:

a display panel configured to emit display light being linearly polarized light;
a first retarder facing the display panel;
a second retarder spaced from the first retarder;
a reflective polarizer configured to transmit polarized light having a polarization axis parallel to a polarization axis of the display light and reflect polarized light having a polarization axis perpendicular to the polarization axis of the display light; and
a semitransmissive mirror between the first retarder and the second retarder, the semitransmissive mirror including a reflective surface facing the second retarder,
wherein each of the first retarder and the second retarder is a quarter-wave plate, and
an optical path length of light emitted from the display panel, transmitted through the semitransmissive mirror, reflected by the reflective polarizer, and reaching the semitransmissive mirror is shorter than a focal length of the semitransmissive mirror.

(40) A display device, comprising:

a display panel configured to emit display light being linearly polarized light;
a first retarder facing the display panel;
a second retarder spaced from the first retarder;
a reflective polarizer configured to transmit polarized light having a polarization axis parallel to a polarization axis of the display light and reflect polarized light having a polarization axis perpendicular to the polarization axis of the display light; and
a semitransmissive mirror between the first retarder and the second retarder, the semitransmissive mirror including a reflective surface facing the second retarder,
wherein each of the first retarder and the second retarder is a quarter-wave plate, and
an optical path length of light emitted from the display panel, transmitted through the semitransmissive mirror, reflected by the reflective polarizer, and reaching the semitransmissive mirror is longer than a focal length of the semitransmissive mirror.

(41) A display device, comprising:

a display panel configured to emit display light being linearly polarized light;
a first retarder configured to transmit the display light;
a second retarder spaced from the first retarder;
a first semitransmissive mirror between the display panel and the first retarder, the first semitransmissive mirror including a first reflective surface facing the first retarder;
a second semitransmissive mirror between the first retarder and the second retarder, the second semitransmissive mirror including a second reflective surface facing the first retarder; and
a polarizer facing the second retarder,
wherein each of the first retarder and the second retarder is a quarter-wave plate, and
an optical path length of light emitted from the display panel, transmitted through the first semitransmissive mirror, reflected by the second semitransmissive mirror, and reaching the first semitransmissive mirror is shorter than a focal length of the first semitransmissive mirror.

(42) A display device, comprising:

a display panel configured to emit display light being linearly polarized light;

a first retarder configured to transmit the display light;

a second retarder spaced from the first retarder;

a first semitransmissive mirror between the display panel and the first retarder, the first semitransmissive mirror including a first reflective surface facing the first retarder;

a second semitransmissive mirror between the first retarder and the second retarder, the second semitransmissive mirror including a second reflective surface facing the first retarder; and

a polarizer facing the second retarder,

wherein each of the first retarder and the second retarder is a quarter-wave plate, and

an optical path length of light emitted from the display panel, transmitted through the first semitransmissive mirror, reflected by the second semitransmissive mirror, and reaching the first semitransmissive mirror is longer than a focal length of the first semitransmissive mirror.

(43) A display device, comprising:

a display panel configured to emit display light being linearly polarized light;

a first retarder configured to transmit the display light;

a second retarder spaced from the first retarder;

a first semitransmissive mirror between the display panel and the first retarder, the first semitransmissive mirror including a first reflective surface facing the first retarder;

a second semitransmissive mirror between the first retarder and the second retarder, the second semitransmissive mirror including a second reflective surface facing the first retarder and a third reflective surface facing the second retarder; and

a third semitransmissive mirror including a fourth reflective surface facing the second retarder,

wherein each of the first retarder and the second retarder is a quarter-wave plate, and

an optical path length of light emitted from the display panel, transmitted through the first semitransmissive mirror, reflected by the second semitransmissive mirror, and reaching the first semitransmissive mirror is shorter than a focal length of the first semitransmissive mirror, and an optical path length of light emitted from the display panel, transmitted through the first semitransmissive mirror, transmitted through the second semitransmissive mirror, and reaching the third semitransmissive mirror is shorter than the focal length of the first semitransmissive mirror.

(44) A display device, comprising:

a display panel configured to emit display light being linearly polarized light;

a first retarder configured to transmit the display light;

a second retarder spaced from the first retarder;

a first semitransmissive mirror between the display panel and the first retarder, the first semitransmissive mirror including a first reflective surface facing the first retarder;

a second semitransmissive mirror between the first retarder and the second retarder, the second semitransmissive mirror including a second reflective surface facing the first retarder and a third reflective surface facing the second retarder; and

a third semitransmissive mirror including a fourth reflective surface facing the second retarder,

wherein each of the first retarder and the second retarder is a quarter-wave plate, and an optical path length of light emitted from the display panel, transmitted through the first semitransmissive mirror, reflected by the second semitransmissive mirror, and reaching the first semitransmissive mirror is longer than a focal length of the first semitransmissive mirror, and an optical path length of light emitted from the display panel, transmitted through the first semitransmissive mirror, transmitted through the second semitransmissive mirror, and reaching the third semitransmissive mirror is longer than the focal length of the first semitransmissive mirror.

(45) A display device, comprising:

a display panel configured to emit display light; and

a convex lens through which the display light is transmitted,

wherein an optical path length from the display panel to the convex lens is shorter than a focal length of the convex lens.

(46) A display device, comprising:

a display panel configured to emit display light; and

a convex lens through which the display light is transmitted,

wherein an optical path length from the display panel to the convex lens is longer than a focal length of the convex lens.

(47) A display system, comprising:

the display device according to any one of (1) to (30), (33) to (37), and (39) to (46); and

a camera,

wherein the display panel is configured to communicate with the camera and display an image captured by the camera.

(48) A vehicle, comprising:
the display system according to (47).

REFERENCE SIGNS

1, 1A, 1A', 1B display device
2 display panel
2a display surface
3 optical system
4 illuminator
5 first retarder
6 semitransmissive mirror
6a reflective surface
7 second retarder
8 reflective polarizer
9 optical element
10 optical system
11 first semitransmissive mirror
11a reflective surface
12 first retarder
13, 13' second semitransmissive mirror
13a, 13'a reflective surface
14 second retarder
15 polarizer
16 optical system
17 first semitransmissive mirror
17a reflective surface
18 first retarder
19 second semitransmissive mirror
19a reflective surface
19b reflective surface
20 second retarder
21 third semitransmissive mirror
21a reflective surface
22 user
22L left eye
22Rright eye
23 movable body
24 windshield
25 third retarder
26 fourth retarder
27 housing
28 opening
29 cluster

30 CID
31 PID
32 RSE
33 Fresnel lens
33a first surface
33b second surface
33c reference point
34 semitransmissive reflective layer
35 optical system
36 housing
37 window
38 light-transmissive plate
40, 39 moth-eye film
41 touchscreen
42 convex lens
43 controller
100 imaging device
101 reflective optical element
102 camera
200 display system
201 camera

**Claims**

1. A display device, comprising:

   a display panel configured to emit display light;
   a first retarder facing the display panel;
   a second retarder spaced from the first retarder;
   a reflective polarizer facing the second retarder, the reflective polarizer being configured to transmit first polarized light and reflect second polarized light; and
   a semitransmissive mirror between the first retarder and the second retarder, the semitransmissive mirror including a reflective surface facing the second retarder,
   wherein the first retarder and the second retarder are configured to convert the display light to the first polarized light and the second polarized light.

2. The display device according to claim 1, wherein
   the first retarder and the second retarder are spaced from each other with air between the first retarder and the second retarder.

3. The display device according to claim 1 or claim 2, further comprising:
   a third retarder between the display panel and the reflective polarizer.

4. The display device according to claim 3, further comprising:
   a fourth retarder between the display panel and the reflective polarizer.

5. The display device according to claim 4, wherein
   one of the third retarder or the fourth retarder is a quarter-wave plate, and the other of the third retarder or the fourth retarder is a half-wave plate.

6. The display device according to claim 4, wherein
   each of the third retarder and the fourth retarder is a half-wave plate.

7. The display device according to any one of claims 1 to 6, wherein
   the reflective surface of the semitransmissive mirror is concave.

8. The display device according to any one of claims 1 to 6, wherein

the semitransmissive mirror is an optical element being a flat plate including a holographic optical element.

9. The display device according to any one of claims 1 to 6, wherein
the semitransmissive mirror includes a Fresnel lens.

10. The display device according to claim 8 or claim 9, wherein
the semitransmissive mirror is integral with at least one of the first retarder or the second retarder.

11. A display device, comprising:

a display panel configured to emit display light;
a first retarder configured to transmit the display light;
a second retarder spaced from the first retarder;
a first semitransmissive mirror between the display panel and the first retarder, the first semitransmissive mirror including a first reflective surface facing the first retarder;
a second semitransmissive mirror between the first retarder and the second retarder, the second semitransmissive mirror including a second reflective surface facing the first retarder; and
a polarizer facing the second retarder,
wherein the first retarder and the second retarder are configured to convert the display light to first polarized light to be transmitted through the polarizer and second polarized light to be transmitted through the polarizer with less transmission than the first polarized light.

12. The display device according to claim 11, wherein
the second reflective surface is a surface convex toward the first retarder.

13. The display device according to claim 11 or claim 12, wherein
the first semitransmissive mirror and the first retarder are spaced from each other with air between the first semitransmissive mirror and the first retarder.

14. The display device according to any one of claims 11 to 13, further comprising:
a third retarder between the display panel and the polarizer.

15. The display device according to claim 14, further comprising:
a fourth retarder between the display panel and the polarizer.

16. The display device according to claim 15, wherein
one of the third retarder or the fourth retarder is a quarter-wave plate, and the other of the third retarder or the fourth retarder is a half-wave plate.

17. The display device according to claim 15, wherein
each of the third retarder and the fourth retarder is a half-wave plate.

18. The display device according to any one of claims 11 to 17, wherein
the first reflective surface is concave.

19. The display device according to any one of claims 11 to 17, wherein
each of the first semitransmissive mirror and the second semitransmissive mirror is an optical element being a flat plate including a holographic optical element.

20. The display device according to any one of claims 11 to 17, wherein
each of the first semitransmissive mirror and the second semitransmissive mirror includes a Fresnel lens.

21. The display device according to claim 19 or claim 20, wherein
the first semitransmissive mirror is integral with at least one of the display panel or the first retarder.

22. The display device according to claim 19 or claim 20, wherein
the second semitransmissive mirror is integral with at least one of the first retarder or the second retarder.

23. A display device, comprising:

   a display panel configured to emit display light;
   a first retarder configured to transmit the display light;
   a second retarder spaced from the first retarder;
   a first semitransmissive mirror between the display panel and the first retarder, the first semitransmissive mirror including a first reflective surface facing the first retarder;
   a second semitransmissive mirror between the first retarder and the second retarder, the second semitransmissive mirror including a second reflective surface facing the first retarder and a third reflective surface facing the second retarder; and
   a third semitransmissive mirror including a fourth reflective surface facing the second retarder.

24. The display device according to claim 23, wherein
   the first semitransmissive mirror and the first retarder are spaced from each other with air between the first semitransmissive mirror and the first retarder, and the third semitransmissive mirror and the second retarder are spaced from each other with air between the third semitransmissive mirror and the second retarder.

25. The display device according to claim 23 or claim 24, wherein
   each of the first reflective surface and the fourth reflective surface is concave.

26. The display device according to claim 23 or claim 24, wherein
   at least one of the first semitransmissive mirror or the third semitransmissive mirror is an optical element being a flat plate including a holographic optical element.

27. The display device according to claim 23 or claim 24, wherein
   each of the first semitransmissive mirror and the third semitransmissive mirror includes a Fresnel lens.

28. The display device according to claim 26 or claim 27, wherein
   the first semitransmissive mirror is integral with at least one of the display panel or the first retarder.

29. The display device according to any one of claims 26 to 28, wherein
   the second semitransmissive mirror is integral with the second retarder.

30. The display device according to any one of claims 1 to 29, wherein

   the display light includes display light of a left-eye image and display light of a right-eye image, and
   the display device further comprises an optical element configured to define a traveling direction of the display light of the left-eye image and a traveling direction of the display light of the right-eye image.

31. An imaging device, comprising:
   the display device according to any one of claims 1 to 30.

32. The imaging device according to claim 31, wherein
   the imaging device is configured to project a virtual image in a field of view of a user, and the virtual image includes a binocular viewable area viewable with a left eye and a right eye of the user, a left-eye viewable area viewable with the left eye without the right eye, and a right-eye viewable area viewable with the right eye without the left eye.

33. A display device, comprising:

   a display panel;
   an optical system configured to project display light emitted from the display panel as a virtual image or a real image; and
   a housing accommodating the display panel and the optical system,
   wherein the housing includes a window configured to transmit light emitted from the optical system, and
   the window, the optical system, and the display panel overlap one another when viewed through the window in the housing.

34. The display device according to claim 33, wherein

the housing includes a light-transmissive plate in the window.

35. The display device according to claim 34, further comprising:
a touchscreen attached to the housing.

36. The display device according to any one of claims 1 to 30 and 33 to 35, further comprising:
an illuminator configured to illuminate a surface of the display panel opposite to a display surface of the display panel.

37. The display device according to any one of claims 1 to 30 and 33 to 36, further comprising:
a controller configured to control at least one of an image displayed on the display panel or the illuminator.

38. A vehicle, comprising:
the display device according to claim 37.

39. A display device, comprising:

a display panel configured to emit display light; and
a convex lens through which the display light is transmitted,
wherein an optical path length from the display panel to the convex lens is shorter than a focal length of the convex lens.

40. A display device, comprising:

a display panel configured to emit display light; and
a convex lens through which the display light is transmitted,
wherein an optical path length from the display panel to the convex lens is longer than a focal length of the convex lens.

41. A display system, comprising:

the display device according to any one of claims 1 to 30, 33 to 37, 39, and 40; and
a camera,
wherein the display panel is configured to communicate with the camera and display an image captured by the camera.

42. A vehicle, comprising:
the display system according to claim 41.

# FIG. 1

# FIG. 2

# FIG. 3

# FIG. 4

FIG. 5

FIG. 6

FIG. 7

1A'

$$b"=1/(1/(a'/2+b')-1/f")$$

a'/2

b'

f" f'

Q'

2

2a

11

11a

13'a

13'

Y

X⊗→Z

FIG. 8

1A'

b2=D

a1=T

b1

f1 f2

Q'

2

2a

11

11a

13'a

13'

Y

X⊗→Z

## FIG. 9

## FIG. 10

## FIG. 11

100

101    1, 1A, 1A', 1B    102

23

22

V

24

## FIG. 12

1L    23    1R

102L

31    30    29    102R

1, 1A, 1A', 1B

# FIG. 13

# FIG. 14

## FIG. 15

## FIG. 16

FIG. 17A

FIG. 17B

FIG. 17C

FIG. 17D

FIG. 18A

FIG. 18B

FIG. 18C

FIG. 18D

FIG. 19

FIG. 20

FIG. 21

FIG. 22

FIG. 23

FIG. 24

FIG. 25

FIG. 26

FIG. 27

FIG. 28

FIG. 29

```
                    ┌──────────────┐
                    │    Start     │
                    └──────┬───────┘
                           │
              ┌────────────────────────┐
              │      Check user        │ S1
              └────────────┬───────────┘
                           │
                          S2                    No
                    ╱ Known user? ╲ ──────────────────────┐
                    ╲             ╱                        │
                        │ Yes                              │
              ┌────────────────────────┐      ┌────────────────────────┐
              │ Obtain user information│ S3   │ Detect user information│ S6
              └────────────┬───────────┘      └────────────┬───────────┘
                           │                               │
              ┌────────────────────────┐      ┌────────────────────────┐
              │   Adjust display device│ S4   │  Adjust display device │ S7
              └────────────┬───────────┘      └────────────┬───────────┘
                          S5          Yes                 S8          Yes
                 ╱ Readjustment to ╲ ────┐       ╱ Readjustment to ╲ ────┐
                 ╲ be performed?   ╱      │       ╲  be performed?  ╱     │
                        │ No              │              │ No             │
                    ┌───────┐             │    ┌────────────────────────┐│
                    │  End  │             │    │ Store user information ││
                    └───────┘             │    │and display device info │ S9
                                          │    └────────────┬───────────┘
                                          │                 │
                                          │            ┌───────┐
                                          │            │  End  │
                                          │            └───────┘
```

FIG. 30

FIG. 31

FIG. 32

FIG. 33

FIG. 34

EP 4 603 892 A1

FIG. 35

FIG. 36

FIG. 37

FIG. 38

FIG. 39

EP 4 603 892 A1

## INTERNATIONAL SEARCH REPORT

International application No.

**PCT/JP2024/040045**

### A. CLASSIFICATION OF SUBJECT MATTER

*G02B 27/02*(2006.01)i; *B60K 35/21*(2024.01)i; *B60K 35/22*(2024.01)i; *B60K 35/23*(2024.01)i; *B60K 35/40*(2024.01)i; *G02B 5/30*(2006.01)i; *G02B 5/32*(2006.01)i; *G02B 27/01*(2006.01)i; *G02B 30/26*(2020.01)i; *G02B 30/30*(2020.01)i; *G02F 1/13*(2006.01)i; *G02F 1/1335*(2006.01)i; *G02F 1/13363*(2006.01)i; *G09F 9/00*(2006.01)i
FI: G02B27/02 Z; G09F9/00 313; B60K35/23; B60K35/22; B60K35/40; G02F1/13363; G02F1/1335 510; G02F1/13 505; G02B30/30; G02B30/26; B60K35/21; G02B5/30; G02B5/32; G02B27/01

According to International Patent Classification (IPC) or to both national classification and IPC

### B. FIELDS SEARCHED

Minimum documentation searched (classification system followed by classification symbols)

G02B27/01-27/02; G02B30/00-30/60; H04N 5/64

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/246286 A1 (FUJIFILM CORPORATION) 09 December 2021 (2021-12-09) paragraphs [0014]-[0187], fig. 4 | 1-2, 7-10, 36-38, 41-42 |
| A | paragraphs [0014]-[0187], fig. 4 | 3-6, 30-32 |
| Y | JP 2023-138468 A (SEMICONDUCTOR ENERGY LABORATORY CO., LTD.) 02 October 2023 (2023-10-02) paragraphs [0030]-[0109], fig. 1-10 | 1-2, 7-10, 36-38, 41-42 |
| Y | JP 2011-109276 A (KONICA MINOLTA OPTO, INC.) 02 June 2011 (2011-06-02) paragraphs [0073]-[0076] | 8 |
| Y | JP 2020-024246 A (SEIKO EPSON CORPORATION) 13 February 2020 (2020-02-13) paragraphs [0007]-[0097], fig. 1-12 | 9-10 |

✓ Further documents are listed in the continuation of Box C.     ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 January 2025** | **28 January 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

59

**INTERNATIONAL SEARCH REPORT**

International application No.

**PCT/JP2024/040045**

| C. | DOCUMENTS CONSIDERED TO BE RELEVANT | |
|---|---|---|
| Category* | Citation of document, with indication, where appropriate, of the relevant passages | Relevant to claim No. |
| Y | JP 2021-097376 A (JVC KENWOOD CORP.) 24 June 2021 (2021-06-24)<br>paragraphs [0014]-[0100], fig. 1-20 | 38, 41-42 |
| A | US 2020/0249480 A1 (GOOGLE LLC) 06 August 2020 (2020-08-06)<br>entire text, all drawings | 1-10, 30-32,<br>36-38, 41-42 |

Form PCT/ISA/210 (second sheet) (July 2022)

## INTERNATIONAL SEARCH REPORT

International application No.

**PCT/JP2024/040045**

| **Box No. III** | **Observations where unity of invention is lacking (Continuation of item 3 of first sheet)** |
|---|---|

This International Searching Authority found multiple inventions in this international application, as follows:

Document 1: WO 2021/246286 A1 (FUJIFILM CORPORATION) 09 December 2021 (2021-12-09), paragraphs [0014]-[0187], fig. 4 & US 2023/0098100 A1, paragraphs [0036]-[0479], fig. 4 & CN 115698785 A

The claims are classified into the following five inventions.

(Invention 1) Claims 1-10 and claims 30-32, 36-38, 41, and 42 depending from claim 1
　　Claims 1-10 and claims 30-32, 36-38, 41, and 42 depending from claim 1 have the special technical feature of comprising: "a display panel for emitting display light; a first phase difference plate facing the display panel; a second phase difference plate spaced apart from the first phase difference plate; a reflective polarizing plate that is disposed facing the second phase difference plate, and transmits first polarized light and reflects second polarized light; and a semi-transmissive mirror that is disposed between the first phase difference plate and the second phase difference plate and has a reflective surface facing the second phase difference plate, the first phase difference plate and the second phase difference plate convert the display light into the first polarized light and the second polarized light, respectively"
　　and are thus classified as invention 1.

(Invention 2) Claims 11-29 and claims 30-32, 36-38, 41, and 42 depending from any of claims 11 and 23
　　Claims 11-22 and claims 30-32, 36-38, 41, and 42 depending from claim 11 share, with claim 1 classified as invention 1, the common technical feature of having the display panel, the first phase difference plate, the second phase difference plate, and the semi-transmissive mirror. However, the technical feature does not make a contribution over the prior art in light of the disclosure of document 1 and thus cannot be considered a special technical feature. Also, there are no other same or corresponding special technical features between claims 11-22 and claims 30-32, 36-38, 41, and 42 depending from claim 11.
　　In addition, claims 11-22 and claims 30-32, 36-38, 41, and 42 depending from claim 11 do not depend from claim 1. Furthermore, claims 11-22 and claims 30-32, 36-38, 41, and 42 depending from claim 11 are not substantially identical to or similarly closely related to any of the claims classified as invention 1.
　　Therefore, claims 11-22 and claims 30-32, 36-38, 41, and 42 depending from claim 11 cannot be classified as invention 1.
　　Also, claims 11-22 and claims 30-32, 36-38, 41, and 42 depending from claim 11 have the special technical feature of comprising: a first phase difference plate for transmitting display light; a first semi-transmissive mirror that is disposed between the display panel and the first phase difference plate and has a first reflective surface facing the first phase difference plate; and a second semi-transmissive mirror that is disposed between the first phase difference plate and the second phase difference plate and has a second reflective surface facing the first phase difference plate, and are thus classified as invention 2.
　　Claims 23-29 and claims 30-32, 36-38, 41, and 42 depending from claim 23 share, with claim 1 classified as invention 1, the common technical feature of having the display panel, the first phase difference plate, the second phase difference plate, and the semi-transmissive mirror. However, the technical feature does not make a contribution over the prior art in light of the disclosure of document 1 and thus cannot be considered a special technical feature. Also, there are no other same or corresponding special technical features between claims 23-29 and claims 30-32, 36-38, 41, and 42 depending from claim 23.
　　Also, claims 23-29 and claims 30-32, 36-38, 41, and 42 depending from claim 23 share, with claim 11 classified as invention 2, the common technical feature of comprising: a first phase difference plate for transmitting display light; a first semi-transmissive mirror that is disposed between the display panel and the first phase difference plate and has a first reflective surface facing the first phase difference plate; and a second semi-transmissive mirror that is disposed between the first phase difference plate and the second phase difference plate and has a second reflective surface facing the first phase difference plate, and are thus classified as invention 2.

(Invention 3) Claims 33-35 and claims 36-38, 41, and 42 depending from claim 33
　　Claims 33-35 and claims 36-38, 41, and 42 depending from claim 33 share, with claim 1 classified as invention 1 and claim 11 or 23 classified as invention 2, the common technical feature of having the display panel. However, it is a well-known feature that products related to display devices have display panels, and thus, this feature cannot be considered a special technical feature. It cannot be said that claims 33-35 and claims 36-38, 41, and 42 depending from claim 33 have special technical features identical or corresponding to those of claim 1 classified as invention 1 and claim 11 or 23 classified as invention 2.

Form PCT/ISA/210 (continuation of first sheet) (July 2022)

**INTERNATIONAL SEARCH REPORT**

| International application No. |
| --- |
| **PCT/JP2024/040045** |

| Box No. III      Observations where unity of invention is lacking (Continuation of item 3 of first sheet) |
| --- |

Also, claims 33-35 and claims 36-38, 41, and 42 depending from claim 33 do not depend from any of claims 1, 11, and 23.

In addition, claims 33-35 and claims 36-38, 41, and 42 depending from claim 33 are not substantially identical to or similarly closely related to any of the claims classified as invention 1 or 2.

Therefore, claims 33-35 and claims 36-38, 41, and 42 depending from claim 33 cannot be classified as either invention 1 or 2.

Also, claims 33-35 and claims 36-38, 41, and 42 depending from claim 33 have the special technical feature of comprising: "a display panel; an optical system for projecting, as a virtual image or a real image, display light emitted from the display panel; and a housing for accommodating the display panel and the optical system, wherein the housing has a window for transmitting the light emitted from the optical system, and when viewing the window of the housing, the window, the optical system, and the display panel are arranged overlapping each other" and are thus classified as invention 3.

(Invention 4) Claim 39 and claims 41 and 42 depending from claim 39

Claims 39 and claims 41 and 42 depending from claim 39 share, with claim 1 classified as invention 1, claim 11 or 23 classified as invention 2, and claim 33 classified as invention 3, the common technical feature of having the display panel. However, it is a well-known feature that products related to display devices have display panels, and thus, this feature cannot be considered a special technical feature. It cannot be said that claims 39 and claims 41 and 42 depending from claim 39 have special technical features identical or corresponding to those of claim 1 classified as invention 1, claim 11 or 23 classified as invention 2, and claim 33 classified as invention 3.

Also, claims 39 and claims 41 and 42 depending from claim 39 do not depend from any of claims 1, 11, 23, and 33.

In addition, claim 39 and claims 41 and 42 depending from claim 39 are not substantially identical to or similarly closely related to any of the claims classified as inventions 1-3.

Therefore, claim 39 and claims 41 and 42 depending from claim 39 cannot be classified as any of inventions 1-3.

Also, claim 39 and claims 41 and 42 depending from claim 39 have the special technical feature of comprising: "a display panel for emitting display light; and a convex lens for transmitting the display light, the length of an optical path from the display panel to the convex lens is less than the focal length of the convex lens" and are thus classified as invention 4.

(Invention 5) Claim 40 and claims 41 and 42 depending from claim 40

Claim 40 and claims 41 and 42 depending from claim 40 share, with claim 1 classified as invention 1, claim 11 or 23 classified as invention 2, and claim 33 classified as invention 3, the common technical feature of having the display panel. However, it is a well-known feature that products related to display devices have display panels, and thus, this feature cannot be considered a special technical feature. Claim 40 and claims 41 and 42 depending from claim 40 share, with claim 39 classified as invention 4, the common technical feature of having the display panel and the convex lens. However, it is a well-known feature that products related to display devices have display panels and convex lenses, and thus, this feature cannot be considered a special technical feature. It cannot be said that claim 40 and claims 41 and 42 depending from claim 40 have special technical features identical or corresponding to those of claim 1 classified as invention 1, claim 11 or 23 classified as invention 2, claim 33 classified as invention 3, and claim 39 classified as invention 4.

Also, claim 40 and claims 41 and 42 depending from claim 40 do not depend from any of claims 1, 11, 23, 33, and 39.

In addition, claim 40 and claims 41 and 42 depending from claim 40 are not substantially identical to or similarly closely related to any of the claims classified as inventions 1-4.

Therefore, claim 40 and claims 41 and 42 depending from claim 40 cannot be classified as any of inventions 1-4.

Also, claim 40 and claims 41 and 42 depending from claim 40 have the special technical feature of comprising: "a display panel for emitting display light; and a convex lens for transmitting the display light, the length of an optical path from the display panel to the convex lens is greater than the focal length of the convex lens" and are thus classified as invention 5.

Form PCT/ISA/210 (continuation of first sheet) (July 2022)

## INTERNATIONAL SEARCH REPORT

| International application No. |
| --- |
| **PCT/JP2024/040045** |

**Box No. III    Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-10 and claims 30-32, 36-38, 41, and 42 depending from claim 1**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/JP2024/040045**

| Patent document cited in search report | | | Publication date (day/month/year) | Patent family member(s) | | | Publication date (day/month/year) |
|---|---|---|---|---|---|---|---|
| WO | 2021/246286 | A1 | 09 December 2021 | US | 2023/0098100 | A1 | |
| | | | | paragraphs [0036]-[0479], fig. 4 | | | |
| | | | | CN | 115698785 | A | |
| JP | 2023-138468 | A | 02 October 2023 | US | 2023/0296910 | A1 | |
| | | | | paragraphs [0052]-[0131], fig. 1-10 | | | |
| | | | | CN | 116774454 | A | |
| | | | | KR | 10-2023-0136533 | A | |
| JP | 2011-109276 | A | 02 June 2011 | (Family: none) | | | |
| JP | 2020-024246 | A | 13 February 2020 | US | 2020/0041795 | A1 | |
| | | | | paragraphs [0018]-[0110], fig. 1-12 | | | |
| JP | 2021-097376 | A | 24 June 2021 | US | 2021/0192834 | A1 | |
| | | | | paragraphs [0033]-[0119], fig. 1-20 | | | |
| US | 2020/0249480 | A1 | 06 August 2020 | WO | 2020/163013 | A1 | |
| | | | | EP | 3921691 | A1 | |
| | | | | CN | 113383261 | A | |

Form PCT/ISA/210 (patent family annex) (July 2022)

**REFERENCES CITED IN THE DESCRIPTION**

**Patent documents cited in the description**

- JP 2022063533 A